(19) Europäisches Patentamt
European Patent Office
Office européen des brevets

(11) **EP 2 497 235 B1**

(12) **FASCICULE DE BREVET EUROPEEN**

(45) Date de publication et mention de la délivrance du brevet:
**14.08.2013 Bulletin 2013/33**

(21) Numéro de dépôt: **10792968.9**

(22) Date de dépôt: **04.11.2010**

(51) Int Cl.:
**H04L 12/801** $^{(2013.01)}$

(86) Numéro de dépôt international:
**PCT/FR2010/052372**

(87) Numéro de publication internationale:
**WO 2011/055086 (12.05.2011 Gazette 2011/19)**

(54) **OUTIL DE DIAGNOSTIC POUR RÉSEAUX À HAUT DÉBIT**

DIAGNOSEINSTRUMENT FÜR BREITBANDNETZE

DIAGNOSTIC TOOL FOR BROADBAND NETWORKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2009 FR 0905285**

(43) Date de publication de la demande:
**12.09.2012 Bulletin 2012/37**

(73) Titulaire: **Inria Institut National de Recherche en Informatique et en Automatique**
**78150 Le Chesnay (FR)**

(72) Inventeurs:
• **VICAT-BLANC PRIMET, Pascale**
**F-69004 Lyon (FR)**
• **GUILLIER, Romaric**
**F-69007 Lyon (FR)**

(74) Mandataire: **Domenego, Bertrand**
**Cabinet Lavoix**
**2, place d'Estienne d'Orves**
**75441 Paris Cedex 09 (FR)**

(56) Documents cités:
**FR-A1- 2 913 838**

**Description**

L'invention concerne un outil informatique à usage dans les réseaux d'échange de données, en particulier à très haut débit.

A titre d'information sur le sujet on pourra par exemple se reporter au document FR A 2 913 838 qui décrit un procédé de contrôle dynamique du nombre de flux de données transitant dans une architecture réseau.

Les réseaux informatiques servent avant tout à l'échange de données entre ordinateurs. Ces réseaux se sont largement développés ces dernières années. Une quantité toujours plus grande de données est échangée chaque jour au moyen de tels réseaux.

Lorsque des données sont à transférer, d'une personne à une autre, d'un lieu à un autre ou d'une machine à une autre par exemple, on privilégie de plus en plus l'usage d'un réseau informatique aux autres types d'échange, par exemple la transmission physique d'un support à mémoire comme le disque compact.

Grâce à l'augmentation des capacités matérielles de traitement et de stockage, il est devenu possible de transmettre de plus grandes quantités de données sur ces réseaux. On constate que la quantité des données échangées lors d'un même transfert a considérablement augmenté ces dernières années, et va probablement continuer à le faire. Un transfert peut concerner aujourd'hui une quantité importante de données, de l'ordre de la centaine de mégaoctets voire du gigaoctet.

L'importance, en quantité, d'un transfert de données s'apprécie habituellement en fonction de la performance théorique du réseau en termes de débit, et finalement au temps que l'utilisateur prévoit comme étant nécessaire à l'accomplissement du transfert.

Les performances d'un réseau sont classiquement assimilées aux performances du matériel constituant le ou les liens réseaux. Pour un réseau purement local par exemple, il s'agit des cartes réseaux des ordinateurs concernés, du commutateur/routeur utilisé et du câblage. D'ailleurs, des spécifications existent pour ses matériels, qui fixent leur débit maximum de fonctionnement. On parle ainsi de cartes réseau "Fast Ethernet", c'est-à-dire capables d'atteindre un débit de 100Mbits/s, ou encore "Gigabit Ethernet" capables d'atteindre un débit de 1 Gbit/s. Pour un réseau s'étendant au moins partiellement sur Internet, c'est le débit de la liaison Internet qui sera généralement considéré, par exemple entre 20 et 30 Mbits/s pour des liaisons de type ADSL grand public ou 100 Mbits/s pour des liaisons par fibre optique.

Le développement des réseaux informatiques s'est accompagné d'un accroissement des performances des matériels réseaux disponibles, en particulier en ce qui concerne le débit.

On s'attendait donc à un accroissement de performances des transferts de données par réseau, résultant de l'amélioration du matériel.

Or, en pratique, si un gain de performance est effectivement constaté, celui reste très en deçà des débits espérés, même en tenant compte du fait que pour ces nouveaux matériels, comme pour les plus anciens, les débits théoriques ne peuvent être qu'exceptionnellement atteints.

Autrement dit, le passage d'une infrastructure classique à une infrastructure à très haut débit ne permet pas d'obtenir aujourd'hui les valeurs de débit escomptées par les utilisateurs.

Le Demandeur s'est fixé pour objectif d'améliorer la situation.

L'outil proposé comprend un agent local de prétransfert, exécutable sur une machine informatique comportant de la mémoire vive, une ou plusieurs unités centrales de traitement, et une ou plusieurs interfaces de communication avec un réseau d'échange de données reliées à la mémoire vive par l'intermédiaire d'un bus de communication, ledit agent comprenant une première fonction adaptée pour établir une première valeur prédictive de limite de débit d'émission ou de réception de données, à partir de données de configuration matérielle relatives à la mémoire, une seconde fonction adaptée pour établir une seconde valeur prédictive de limite de débit d'émission ou de réception de données, à partir de données de configuration matérielle relatives aux unités de traitement, une troisième fonction adaptée pour établir une troisième valeur prédictive de limite de débit d'émission ou de réception de données, à partir de données de configuration matérielle relatives au bus de communication, une quatrième fonction adaptée pour établir une quatrième valeur prédictive de limite de débit d'émission ou de réception de données, à partir de données de configuration matérielle relatives à l'interface de communication, et une fonction de diagnostic matériel agencée pour appeler chacune des première, seconde, troisième et quatrième fonctions, et pour établir, à partir des première, seconde, troisième et quatrième valeurs prédictives de limite de débit résultantes, une valeur-référence de débit d'émission ou de réception de données conformément à des règles prédéfinie de comparaison desdites valeurs prédictives, l'agent local étant agencé pour, sur appel préalable à un transfert de données, lancer la fonction de diagnostic matériel et pour retourner ladite valeur-référence de débit d'émission ou de réception de données en tant que grandeur d'intérêt en liaison avec au moins une autre grandeur de débit d'émission ou de réception de données.

L'agent local permet d'obtenir une valeur-référence de débit qui caractérise les performances de l'ensemble des éléments matériels opérant lors d'un échange de données au travers d'un réseau.

Le Demandeur a constaté que la valeur-référence ainsi établie caractérise efficacement un goulot d'étranglement lié aux éléments matériels des ordinateurs impliqués dans un échange de données au travers d'un réseau. Cette valeur-référence est telle qu'il est pertinent de la comparer à d'autres valeurs-références de débit disponibles, relatives à d'autres éléments opérants lors d'un transfert de données.

Cette valeur-référence est établie en prenant en compte l'importance des éléments matériels dans une opération de transfert de données, laquelle met en jeu d'autres éléments comme des éléments logiciels ou de réseau.

La façon dont est établie cette valeur-référence revêt une grande importance : une valeur en deçà des performances de débit effectives du matériel conduirait à considérer ce matériel comme limitant toujours les performances de transfert, ce qui peut se trouver inexact. Au contraire, une valeur supérieure aux performances effectives mettrait le matériel définitivement hors de cause, ce qui peut être tout aussi faux, en particulier pour des réseaux à très haut débit.

Ici, la valeur-référence se trouve être juste, tout en restant prédictive. Cette valeur-référence est en effet établie préalablement aux transferts de données.

Pour établir cette valeur-référence, le Demandeur est d'abord parvenu à identifier l'ensemble des éléments matériels susceptibles de limiter les performances de débit de transfert, et uniquement ceux-ci.

L'identification de ces éléments matériels revêt aussi une grande importance : prendre en compte un élément matériel en pratique inopérant peut influer sur la valeur-référence établie, en particulier limiter de manière erronée celle-ci. Au contraire, ne pas prendre en compte un élément opérant conduit à une valeur-référence erronée, qui ne peut plus être comparée à d'autres valeurs de débit de façon pertinente.

Chacune des valeurs prédictives de débit d'émission ou réception de données est établie de manière telle qu'elle puisse être comparée, avec pertinence, aux autres valeurs prédictives de débit.

La valeur-référence présente un intérêt particulier en ce qu'elle peut servir de base à des opérations ultérieures d'optimisation des conditions du transfert de données. Ainsi, par exemple, toute opération d'optimisation destinée à augmenter un débit effectif à une valeur supérieure à la valeur-référence se révèle, par avance, inutile. Ladite opération d'optimisation peut néanmoins être mise en oeuvre avec pour objectif d'atteindre un débit effectif proche de la valeur-référence. Ainsi l'agent local pourra avantageusement être appelé préalablement à toute opération d'optimisation de débit de transfert.

D'autres caractéristiques et avantages de l'invention apparaîtront à l'examen de la description détaillée ci-après, et des dessins annexés sur lesquels :

- la figure 1 représente un schéma d'une installation informatique,

- la figure 2 représente un schéma qui montre les éléments matériels d'un ordinateur de l'installation de la figure 1,

- la figure 3 représente un schéma qui montre les éléments matériels d'un ordinateur de l'installation de la figure 1, dans une représentation différente de la figure 2,

- la figure 4 représente un ordinogramme illustrant le fonctionnement d'un agent local de configuration exécutable sur un ordinateur de l'installation de la figure 1,

- la figure 5 représente un ordinogramme illustrant le fonctionnement d'une fonction de configuration matérielle de l'agent local de la figure 4,

- la figure 6 représente un schéma d'un objet de configuration matérielle,

- la figure 7 représente un ordinogramme illustrant le fonctionnement d'une fonction d'inspection matérielle pour la fonction de configuration matérielle de la figure 5,

- la figure 8 représente un ordinogramme illustrant le fonctionnement d'une fonction de diagnostic matériel pour la fonction de configuration matérielle de la figure 5,

- la figure 9 représente un ordinogramme illustrant le fonctionnement d'une fonction de configuration logicielle de l'agent local de la figure 4,

- la figure 10 représente un schéma d'un objet de configuration logicielle,

- la figure 11 représente un ordinogramme illustrant le fonctionnement d'une fonction d'inspection logicielle pour la fonction de configuration logicielle de la figure 9,

D'autre part :

- l'annexe 1 rassemble des formules à usage dans la fonction de configuration matérielle,
- l'annexe 2 rassemble des formules à usage dans la fonction de configuration logicielle, et
- l'annexe 3 rassemble des données pour la fonction de configuration matérielle.

Les dessins et les annexes à la description comprennent, pour l'essentiel, des éléments de caractère certain. Ils pourront donc non seulement servir à mieux faire comprendre la description, mais aussi contribuer à la définition de l'invention, le cas échéant.

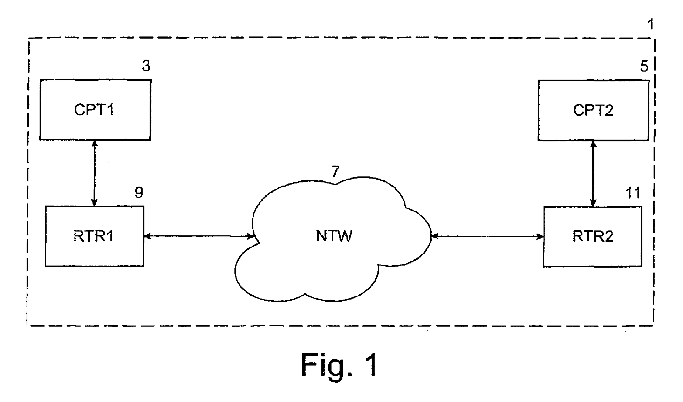

La figure 1 montre une installation informatique 1 comprenant un premier dispositif informatique sous la forme d'un premier ordinateur 3 et un second dispositif informatique, sous la forme d'un second ordinateur 5.

Le premier ordinateur 3 et le second ordinateur 5 peuvent prendre des formes très différentes, telles qu'un ordinateur personnel, une station de travail, un serveur d'applications, un serveur de fichiers, un serveur Internet ou autre.

Le premier ordinateur 3 est relié à un point d'accès à un réseau d'échange de données 7. Ce point d'accès prend ici la forme d'un premier routeur 9.

Le second ordinateur 5 est relié à ce réseau d'échange de données 7 par un point d'accès, ici un second routeur 11.

Le premier routeur 9 et/ou le second routeur 11 peuvent en outre assurer une fonction complémentaire de modulation/démodulation de signal, c'est-à-dire également fonctionner en tant que "modem".

Le premier ordinateur 3 et le second ordinateur 5 sont capables d'échanger des données entre eux par l'intermédiaire du réseau 7.

Ici, le réseau d'échange de données 7 fonctionne conformément au protocole TCP/IP, tel que défini par les normes RFC 791 (pour le protocole IP), RFC 793 (pour le protocole TCP) et leurs évolutions, définies par l'IETF (Internet Engineering Task Force). D'autres protocoles de transport/réseau sont envisageables, en particulier qui s'appuient sur un échange de données par paquets.

Le réseau 7 peut prendre la forme d'un réseau privé virtuel, ou VPN ("virtual private network" en anglais), au sein d'une institution par exemple, ou être au moins partiellement public comme Internet. Le réseau 7 peut être du type réseau local, ou LAN ("local area network" en anglais) ou du type réseau étendu, ou "WAN" ("wide area network" en anglais).

Les formes de réalisation du premier équipement informatique et du second équipement informatique ne sont pas limitées aux premier ordinateur 3 et second ordinateur 5, mais peuvent comprendre tous dispositifs capables de traiter des données informatiques pourvus de moyens logiciels et matériels pour l'échange de fichiers au travers du réseau 7.

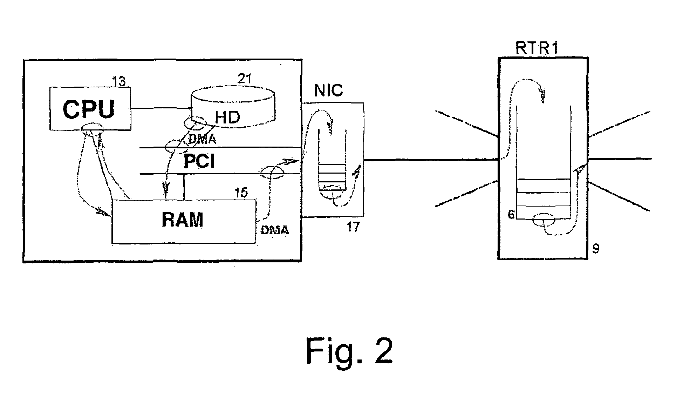

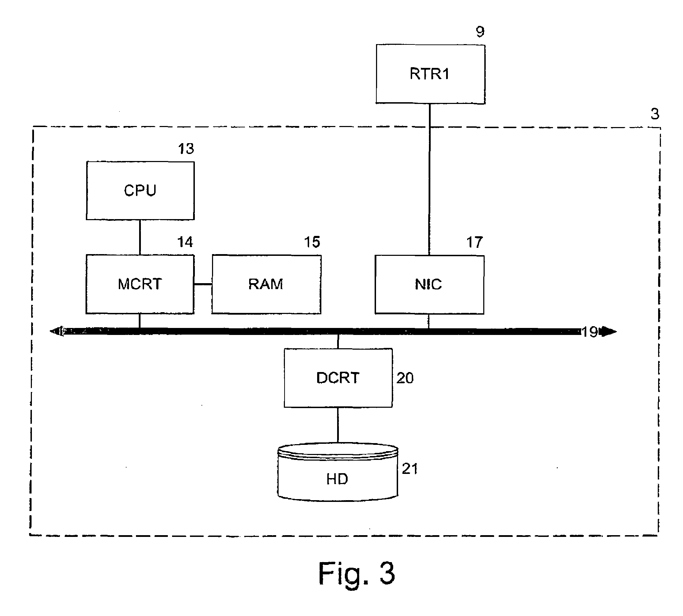

Les figures 2 et 3 détaillent les composants matériels du premier ordinateur 3 opérants lors d'un échange de données par l'intermédiaire du réseau 7.

Le premier ordinateur 3 comprend une ou plusieurs unités de calcul 13, de type microprocesseurs par exemple, reliées avec possibilité d'échange de données à de la mémoire volatile, ou mémoire RAM 15, (pour "random access memory" ou "mémoire à accès direct en français") par l'intermédiaire d'un contrôleur de mémoire MCRT 14. Les unités CPU 13, le contrôleur MCRT 14 et la mémoire RAM 15 sont reliés entre eux par des canaux d'échange de données, ou bus mémoire.

Le premier ordinateur 3 comprend encore un contrôleur d'interface réseau, ou contrôleur NIC 17. Ici le contrôleur NIC 17 prend la forme d'une carte réseau de type "Ethernet", c'est-à-dire qui répond à la norme IEEE 802.3 ou ISO/IEC 8802-3. Bien que l'invention présente un intérêt tout particulier pour des ordinateurs équipés de cartes à très haut débit, tels que des cartes "Fast Ethernet", "Gigabit Ethernet" ou "10G Ethernet", elle reste avantageuse dans le cas de cartes de plus faibles capacités, par exemple "Ethernet 10 Mbps".

D'autres types de contrôleurs d'interface réseau peuvent être envisagés, par exemple une carte réseau de type "Myrinet", c'est-à-dire conforme à la norme ANSI/VITA 26-1998.

Le contrôleur NIC 17 peut se trouver physiquement intégré sur la carte mère de l'ordinateur.

Le contrôleur NIC 17 est relié à la RAM 15 par l'intermédiaire d'un bus d'échange de données, ici de type PCI, ou bus PCI 19. En effet, le contrôleur MRCT 14 est relié au bus PCI 19.

Le contrôleur d'interface réseau 17 est relié au premier routeur 9 par l'intermédiaire d'un support de transmission de données, tel qu'un câble réseau, une liaison de transmission sans fil, par exemple de type Wi-fi ou Bluetooth, un segment de fibre optique ou autres.

Le premier ordinateur 3 comprend encore un ou plusieurs dispositifs de stockage permanent de données, ou disques HD 21, optionnels, capables d'échange de données avec la RAM 15 par l'intermédiaire du bus PCI 19. Plus précisément, les disques HD 21 sont reliés au bus PCI 19 par l'intermédiaire d'un ou plusieurs contrôleurs de disques, ou contrôleurs DCRT 20. Typiquement, les disques HD 21 prennent la forme de disques durs.

Bien que cela ne soit pas représenté sur la figure 3, le contrôleur MCRT14, la mémoire RAM 15, l'interface NIC 17, les contrôleurs DCRT 20 et les disques HD 21 sont respectivement reliés aux unités CPU 13 avec possibilité d'échange de signaux électriques, en particulier pour la synchronisation des opérations entres ces éléments matériels.

Le transfert de données depuis l'un des disques 21 du premier ordinateur 1 jusqu'à l'un des disques HD 21 du second ordinateur 5 comprend un transfert de ces données au routeur 9. Ce dernier transfert se déroule comme suit :

a. Les données à transférer, contenues dans un disque HD 21, sont copiées dans la mémoire RAM 15 par l'intermédiaire du bus PCI 19.

b. Ces données sont transmises de la mémoire RAM 15 à l'unité CPU 13 pour un ou plusieurs traitements, y compris la division de ces données à transférer en paquets de données de taille prédéfinie.

c. Ces paquets de données sont copiés progressivement dans une file d'attente de transmission maintenue dans la mémoire RAM 15.

d. Les paquets de données de cette file d'attente de transmission sont progressivement copiés dans une file d'attente d'émission du contrôleur NIC 17.

e. Les paquets de données de cette dernière file d'attente d'émission sont envoyés au premier routeur 9.

f. Les paquets sont progressivement pris en charge par le premier routeur 9, après une éventuelle attente dans une file maintenue dans ce routeur.

Le second ordinateur 5 comprend une structure matérielle, non représentée, analogue à celle qui vient d'être décrite en relation avec le premier ordinateur 3.

Le transfert de données de l'un des disques 21 du premier ordinateur 1 à l'un des disques 21 du second ordinateur 5 comprend la réception de données du réseau 7 au disque 21 du second ordinateur 5. Cette réception se déroule de la manière suivante :

a. Des paquets de données sont progressivement reçus au second routeur 11 et éventuellement stockés dans une file d'attente de ce routeur.

b. Les paquets de données du second routeur 11 sont progressivement reçus dans une file d'attente de réception du contrôleur NIC 17 du second ordinateur 5.

c. Ces paquets de données sont progressivement copiés depuis la file d'attente du contrôleur NIC 17 dans une file d'attente de réception maintenue dans la mémoire RAM 15.

d. Les paquets de données de la file d'attente de réception sont transmis à l'unité CPU 13 pour un ou plusieurs traitements, y compris un assemblage des paquets de données.

e. Les données assemblées sont transmises à la mémoire RAM 15.

f. Ces données assemblées sont copiées sur le disque 21.

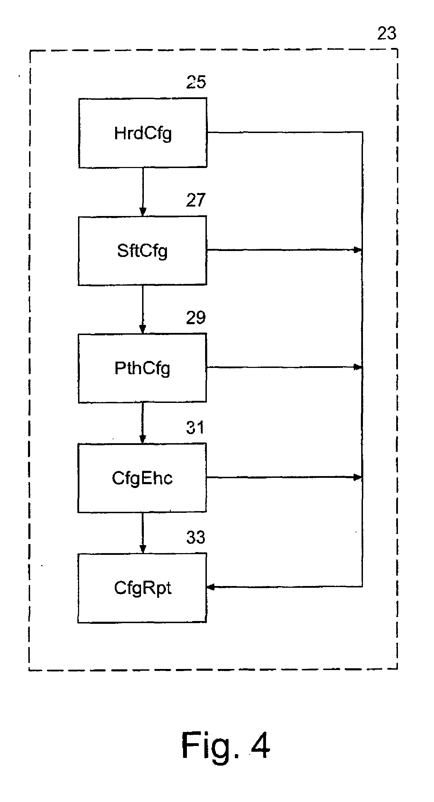

Chacun du premier ordinateur 3 et du second ordinateur 5 exécute un outil de configuration 23, ou agent, illustré sur la figure 4.

Le premier ordinateur 3, ici ordinateur source, va émettre une quantité de données informatiques à destination du second ordinateur 5, ici ordinateur destinataire. Pour chacun du premier ordinateur 3 et du second ordinateur 5, l'outil de configuration 23 exécuté sur l'ordinateur en question forme un agent local de configuration, tandis que l'outil de configuration 23 exécuté sur l'autre de ces ordinateurs forme un agent de configuration distant.

L'agent de configuration 23 comprend les fonctions suivantes :

- une fonction de configuration matérielle, ou fonction HrdCfg 25, adaptée pour établir une première valeur prédictive de limite de débit d'émission ou de réception, à partir de caractéristiques intrinsèques et de la configuration d'éléments matériels constitutifs du premier ordinateur 3,

- une fonction de configuration logicielle, ou fonction SftCfg 27, adaptée pour établir une seconde valeur prédictive de limite de débit d'émission/réception, à partir de données de configuration des éléments logiciels de l'ordinateur local,

- une fonction de configuration réseau, ou fonction PthCfg 29, adaptée pour établir une troisième valeur prédictive de limite de débit d'émission/réception, à partir de données caractéristiques de la liaison réseau 7 entre le premier ordinateur 3 et le second ordinateur 5,

- une fonction d'optimisation, ou fonction CfgEhc 31, optionnelle, adaptée pour proposer à l'utilisateur une ou plusieurs modifications des configurations logicielles, matérielle, et/ou de chemins réseaux en vue d'augmenter les valeurs limites de débits d'émission/réception, et

- une fonction de compte-rendu, ou fonction CfgRpt 33, adaptée pour rapporter le résultat d'appel des fonctions HrdCfg 25, SftCfg 27 et PthCfg 29 sous une forme compréhensible de l'utilisateur.

Avantageusement, l'agent de configuration 23 est agencé pour exécuter, sur appel, l'ensemble des fonctions ci-dessus, successivement et dans l'ordre de leur énumération. Ceci n'exclut pas que certaines de ces fonctions ne soient pas appelées et/ou non implémentées dans l'agent de configuration 23, par exemple parce qu'elles se rapportent à un élément du transfert de données dont il est connu qu'il ne peut, d'aucune façon, limiter les valeurs prédictives de limite de débit.

Ici, l'outil de configuration 23 est en outre agencé pour recevoir en tant que paramètres:

- un identifiant src de la machine depuis laquelle le transfert de données doit avoir lieu, ou machine source. Cet identifiant src peut par exemple prendre la forme d'une chaîne de caractères représentant un nom de l'ordinateur sur le réseau ("hostname" ou "nom d'hôte" en français) ou d'une adresse dite "IP". Par défaut, la source de ce transfert est l'ordinateur sur lequel l'agent de configuration est exécuté, et l'identifiant src prend alors la valeur "localhost" (ou "hôte local").

- un identifiant *dst* de la machine à destination de laquelle le transfert de données doit avoir lieu, ou machine destinataire. Cette identifiant peut prendre la forme d'une chaîne de caractères identifiant l'ordinateur en question sur le réseau, par exemple sous la forme d'une chaîne de caractères ou d'une adresse "IP".

- une valeur d'ordre de magnitude V indicatrice d'un ordre de grandeur du volume de données à transférer de l'ordinateur source à l'ordinateur destinataire.

L'agent de configuration 23 peut être agencé pour recevoir des valeurs de paramètres optionnels. Par exemple, l'agent de configuration 23 peut recevoir une valeur de durée réelle de transfert *RTT* (pour "Round-Trip Time" ou temps d'aller-retour) indiquant le temps nécessaire à un paquet de données pour effectuer un aller-retour sur le réseau, c'est-à-dire pour transiter de l'interface NIC 17 de l'ordinateur source à l'interface NIC 17 de l'ordinateur destinataire et revenir à l'ordinateur source. L'agent de configuration peut également recevoir une valeur de débit cible *T* que l'utilisateur souhaite atteindre pour les transferts de données ultérieures.

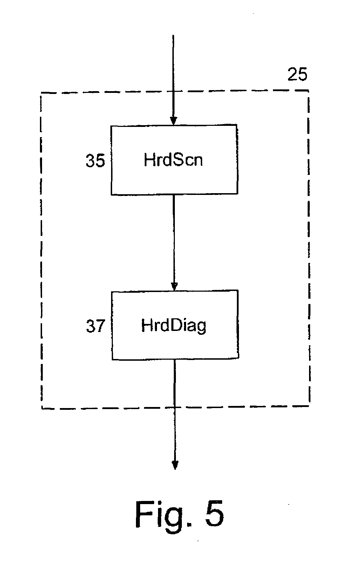

Il est fait référence à la figure 5.

La fonction HrdCfg 25 est agencée pour appeler une fonction d'inspection de matériel, ou fonction HrdScn 35, adaptée pour récupérer les valeurs d'un jeu de paramètres caractéristiques de la configuration matérielle de l'ordinateur hôte local, puis une fonction de diagnostic matériel HrdDiag 37, adaptée pour établir une première valeur de limite de débit d'émission/réception *Rhardware* à partir du jeu de paramètres établi par la fonction HrdScn 35.

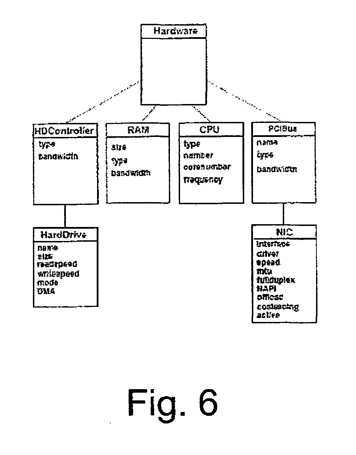

La figure 6 montre une représentation avantageuse du jeu de paramètres en question, sous la forme d'un objet informatique de type configuration matérielle, ou objet 'hardwareconfig'.

Un objet 'hardwareConfig' présente une structure arborescente comprenant un noeud disque, ou 'HDController', rassemblant les paramètres liés au fonctionnement du ou des contrôleurs de disques durs 21, un noeud mémoire 'RAM', ou unités de traitement, ou rassemblant les paramètres liés au fonctionnement de la mémoire RAM 15, un noeud 'CPU' rassemblant les paramètres liés au fonctionnement des unités CPU 13 et un noeud, bus, ou 'PCIBus' rassemblant les paramètres liés au fonctionnement du bus PCI 19.

Un objet 'hardwareconfig' comprend une branche 'HDController' pour chacun des contrôleurs de disques durs 21 présents dans l'ordinateur hôte local.

Chaque branche 'HDController' comprend une entrée 'type' caractérisant le type du contrôleur considéré, et une entrée 'bandwidth' caractérisant la bande passante théorique de ce contrôleur, c'est-à-dire la quantité de données qui peut transiter par ce contrôleur par unité de temps, et un noeud 'HardDrive' rassemblant les paramètres liés au fonctionnement du ou des disques durs 21 attachés au contrôleur considéré.

L'entrée 'type' peut par exemple se voir associer une chaîne de caractères identifiant l'un des standards SATA ("Serial Advanced Technology Attachment" ou liaison série de technologie avancée), SCSI ("Small Computer System Interface"), PATA ("Parallel Advanced Technology Attachment"). D'autres valeurs peuvent exister, en particulier en fonction des évolutions technologiques futures sur ce type de composants informatiques.

Chaque branche 'HDController' comprend une branche 'HardDrive" pour chacun des disques durs 21 attachés au contrôleur en question.

Chaque branche 'HardDrive' comprend une entrée 'name' identifiant le disque dur en question, une entrée 'size' caractérisant la capacité de stockage de données de ce disque, une entrée 'readspeed' caractérisant une vitesse du disque en lecture (quantité de données pouvant être lue par unité de temps), une entrée 'writespeed' caractérisant une vitesse du disque en écriture (quantité de données pouvant être écrite par unité de temps), une entrée 'mode' caractérisant un mode de fonctionnement standardisé du disque, et une entrée 'DMA' de type booléen indiquant si le disque dur fonctionne conformément au procédé DMA ("direct access memory" ou "accès direct à la mémoire"). Conformément au procédé DMA, les données émises par un périphérique, tel qu'un port de communication ou un disque dur, ou reçu par lui sont transférées directement par un contrôleur adapté vers la mémoire RAM de l'ordinateur, sans intervention des unités CPU autre que pour l'initiation et la conclusion dudit transfert.

Les modes de fonctionnement des disques durs actuellement utilisés de façon courante, c'est-à-dire sur les ordinateurs assemblés en série, comprennent les modes PIO, DMA, UDMA ou SATA.

Chaque branche 'RAM' comprend une entrée 'size' caractérisant la capacité de stockage de données de la mémoire RAM 15 de l'ordinateur hôte local, une entrée 'type' caractérisant le type cette mémoire RAM 15, et une entrée 'bandwidth' caractérisant la bande-passante théorique de la mémoire RAM 15.

Une branche 'CPU' comprend une entrée 'number' indiquant le nombre d'unités CPU 13 physiquement installées à l'intérieur de l'ordinateur hôte local et, pour chacune de ces unités CPU 13, une entrée 'type' caractérisant le type de cette unité, une entrée 'corenumber' indiquant le nombre de ses coeurs ("core" en anglais"). La branche 'CPU' comprend également une entrée 'frequency' indiquant la fréquence de fonctionnement commune à l'ensemble de ces unités CPU 13.

Un objet 'hardwareconfig' comprend au moins une branche 'PCIBus', relative à un bus PCI 19, qui présente un noeud 'NIC' rassemblant des valeurs de paramètres liés au fonctionnement du ou des contrôleurs NIC 17 attachés au bus considéré.

L'ordinateur hôte local peut comprendre plusieurs bus PCI 19, en particulier de types différents. L'objet 'hardwareconfig' peut alors comprendre une branche pour chacun de ces bus. En pratique, il est possible de limiter les branches 'PCIBus' aux seuls bus auxquels est relié au moins un contrôleur NIC.

L'ordinateur hôte local pourrait comprendre plusieurs contrôleurs NIC 17, par exemple reliés à des points d'accès à des réseaux différents, ou bien couplés pour améliorer les performances de transmission/réception. L'objet 'hardwareconfig' peut rassembler les entrées relatives à chacun de ces contrôleurs NIC 17. Cependant, il est également possible de ne conserver que les entrées des contrôleurs concernés par la transmission considérée ou encore de ne conserver que l'entrée correspondant au plus performant de ces contrôleurs NIC 17 afin de simplifier la réalisation de l'outil de configuration 23.

Chaque branche 'PCIBus' comprend une entrée 'name' identifiant le bus PCI 19 considéré, une entrée 'type' caractérisant le type de ce bus PCI 19, et une entrée 'bandwith' indiquant la bande passante du bus en question.

Actuellement, l'entrée 'type' de la branche 'PCIBus' peut se voir associer une chaîne de caractères identifiant l'un des standards PCI, PCI-X ou PCI-Express (PCI-E). D'autres standards peuvent exister, en particulier en fonction des développements technologiques futurs sur ces composants informatiques.

Chaque branche 'NIC' relative à un contrôleur NIC 17 comprend une entrée 'interface' identifiant l'interface réseau utilisée par le contrôleur (par exemple Ethernet ou Gigabit), une entrée 'driver' identifiant le pilote utilisé pour ce contrôleur, une entrée 'speed' indiquant une vitesse de transmission théorique de ce contrôleur, c'est-à-dire une valeur de débit de transmission tel que négocié entre le contrôleur NIC 17 en question et le premier routeur auquel cette interface est connectée (ici, le premier routeur 9), une entrée 'MTU' indiquant la taille maximale en octets d'un paquet de données pouvant être transmis en une seule fois (MTU pour "Maximum transmission unit" ou unité de transmission maximale, valeur négociée entre le contrôleur NIC et le commutateur/routeur auquel le contrôleur NIC est relié), une entrée 'fullduplex' de type booléen indiquant si le contrôleur est capable de simultanément émettre et recevoir des données ou non, une entrée 'NAPI' de type booléen indiquant si le noyau du système d'exploitation présente une interface NAPI (mode de fonctionnement dans lequel les échanges CPU/cartes réseau sont réalisés à intervalles réguliers plutôt que par des "interrupts", c'est-à-dire plutôt qu'au moyen de requêtes d'interruption. Cette API est pour l'instant limitée aux noyaux GNU/linux, mais d'autres systèmes d'exploitation peuvent présenter des interfaces analogues), une entrée 'offload', de type booléen, qui indique une configuration dans laquelle certaines opérations, telles que la fragmentation des paquets de données, le calcul de l'intégrité de ces paquets ou "checksum", sont réalisées par l'interface en question et non par les unités CPU, une entrée 'coalescing', de type booléen, indiquant si l'interface NIC 17 présente la fonctionnalité de générer une interruption demandant de traiter des paquets de données reçus qu'une fois que cette interface a reçu un nombre donné de paquets ou qu'une durée donnée a expiré, et une entrée 'active' indiquant si le contrôleur considéré est activé dans la configuration de l'ordinateur hôte considéré.

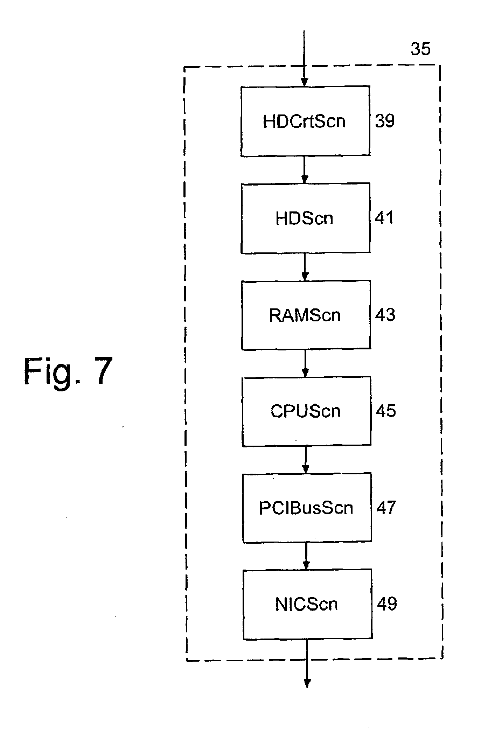

Il est fait référence à la figure 7.

La fonction HrdScn 35 est agencée pour recevoir un objet de type 'hardwareconfig' en tant qu'entrée et pour délivrer un objet de type 'hardwareconfig' présentant des entrées renseignées en tant que sortie.

La fonction HrdScn 35 peut appeler une sous-fonction d'inspection de contrôleurs de disques, ou fonction HDCrtScn 39, adaptée pour renseigner les entrées des branches 'HDController'. La fonction HDCrtScn 39 est par exemple agencée pour appeler le système de bus de communication "dbus" [http://www.freedesktop.org/wiki/dbus], fonctionnant sous le système d'exploitation GNU/Linux, capable de renvoyer une description des éléments matériels constitutif de l'ordinateur, ce qui permet de renseigner lesdites entrées.

La fonction HrdScn 35 peut appeler une sous-fonction d'inspection de disques, ou fonction HDScn 41, adaptée pour renseigner les entrées de chaque branche 'Harddrive' de l'objet 'hardwareconfig'. Cette fonction HDScn 41 est par exemple agencée pour appeler le programme "hdparm" [http://sourceforge.net/projetcs/hdparm/], fonctionnant sous le système d'exploitation GNU/Linux, et capable de renvoyer les informations nécessaires au renseignement desdites entrées. La fonction HDScn 41 est alors agencée pour appeler la fonction de test, ou "benchmarking", de ce programme "hdparm", et avec l'option "Bufferedread".

Des outils informatiques analogues peuvent également être utilisés, en complément ou en remplacement de "hdparm". Le cas échéant, les valeurs des vitesses d'écriture et de lecture du disque peuvent correspondre à une valeur moyenne de chacune des valeurs retournées par les différents outils de diagnostic, éventuellement pondérée, ou, en remplacement, uniquement à la plus faible de ces valeurs.

La fonction HrdScn 35 peut appeler une sous-fonction d'inspection mémoire, ou fonction RAMScn 43, adaptée pour renseigner les entrées de la branche 'RAM' de l'objet 'hardwareconfig'. Cette fonction RAMScn 43 est par exemple agencée pour appeler le programme "dmidecode" [http://www.nongnu.org/dmidecode/], fonctionnant sous le système d'exploitation GNU/Linux, et capable de renvoyer les informations nécessaires au renseignement desdites entrées. Les valeurs associées aux entrées en questions peuvent également être récupérées depuis le système de gestion du BIOS, ou SMBIOS, et des tables dites "DMI" (pour "Desktop Management Interface"), directement, ou à l'aide d'un outil différent de "dmidecode".

La fonction HrdScn 35 peut appeler une sous-fonction d'inspection des unités CPU, ou fonction CPUScn 45, adaptée pour renseigner les entrées de la branche 'CPU' de l'objet 'hardwareconfig'. Cette fonction CPUScn 45 est par exemple agencée pour consulter l'entrée "cpuinfo" du pseudo-système de fichiers du système d'exploitation GNU/Linux, qui contient les informations sur les processeurs de l'ordinateur, et renseigner lesdites entrées. Des programmes analogues peuvent être employés, en remplacement ou en complément, par exemple le programme "cpuinfo" fonctionnant sous le système d'exploitation Microsoft Windows (noms commerciaux enregistrés).

La fonction HrdScn 35 peut appeler une sous-fonction d'inspection de bus, ou fonction PCIScn 47, adaptée pour renseigner les entrées de chaque branche 'PCIBus' de l'objet 'hardwareconfig'. Cette fonction PCIScn 47 est par exemple agencée pour appeler le système "dbus".

La fonction HrdScn 35 peut appeler une fonction d'inspection d'interfaces réseau, ou fonction NICScn 49, adaptée pour renseigner les entrées de chaque branche 'NIC' de l'objet 'hardwareconfig'. Cette fonction NICScn 49 est par exemple agencée pour appeler le programme "ethtool" [http://www.freshmeat.net/projetcs/ethtool] et/ou la commande Unix "ifconfig", fonctionnant sous le système d'exploitation GNU/Linux, et capables de renvoyer les informations nécessaires au renseignement desdites entrées. Des programmes analogues peuvent être utilisés, en remplacement ou en complément de "ethtool" et "ifconfig", en particulier lorsque le système d'exploitation de l'ordinateur hôte local diffère de GNU/Linux.

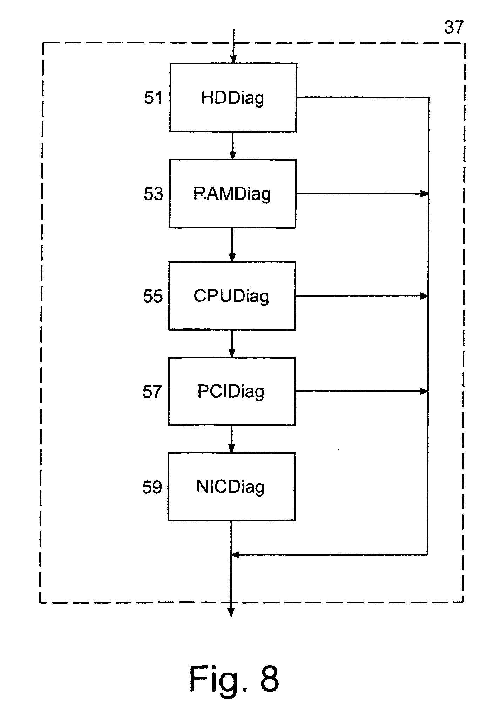

Il est fait référence à la figure 8.

La fonction HrdDiag 37 est agencée pour recevoir un objet de type 'hardwareconfig' en tant qu'entrée et pour délivrer, en tant que sortie, une première valeur prédictive de limite débit d'émission/réception *Rhardware* conformément à la formule de l'annexe A.1.1. Dans cette formule :

- *Bdisk* correspond à une première valeur prédictive de limite d'émission/réception, établie en tenant compte de la configuration des disques durs 21 de l'ordinateur hôte local. La valeur *Bdisk* est établie exclusivement à partir de caractéristiques intrinsèques et de paramètres de configuration de ces disques durs 21, tirés ici des valeurs associées aux entrées de chaque branche 'Harddrive' de l'objet 'hardwareconfig'.

- *Bram* correspond à une seconde valeur prédictive de limite de débit d'émission/réception, établie en tenant compte de la configuration de la mémoire RAM 15. La valeur *BRAM* est établie exclusivement à partir de caractéristiques intrinsèques et de paramètres de configuration de cette mémoire RAM 15.

- Bcpu correspond à une troisième valeur prédictive de limite de débit d'émission/réception, établie en tenant compte de la configuration des unités de traitement CPU 13. Cette valeur *Bcpu* est établie exclusivement à partir de caractéristiques intrinsèques et de paramètres de configuration de ces unités de traitement CPU 13.

- Bpci correspond à une quatrième valeur prédictive de limite de débit d'émission/réception, établie en tenant compte de la configuration du bus PCI 19. Cette valeur est établie exclusivement à partir de caractéristiques intrinsèques et de paramètres de configuration de ce bus 19.

- *Bnic* correspond à une cinquième valeur prédictive de limite de débit d'émission/réception, établie en tenant compte de la configuration du contrôleur NIC 17. Cette valeur est établie exclusivement à partir de caractéristiques intrinsèques et de paramètres de configuration du contrôleur NIC 19.

La valeur associée à la première valeur *Rhardware* de limite de débit, telle que retournée par la fonction HrdDiag37, prend ici la valeur de la plus petite des valeurs du groupe formé des valeurs de *Bdisk, Bram, Bcpu, Bpci* et *Bnic*.

La valeur *Rhardware* est ainsi établie conformément à des règles prédéfinies de comparaison de l'ensemble des valeurs de limite de débit *Bdisk, Bram, Bcpu, Bpci* et *Bnic*.

Des règles de comparaison différentes peuvent être envisagées en remplacement de la formule de l'annexe A.1.1. Par exemple, il est possible de comparer ces valeurs prédictives deux à deux, en débutant par la valeur prédictive que l'on imagine la plus critique.

La valeur *Rhardware* représente la bande passante maximale qui peut être obtenue avec une configuration matérielle donnée de l'ordinateur hôte local. Cette valeur de bande passante maximale correspond à la plus petite des valeurs de bande passante aux potentiels goulots d'étranglement que sont les éléments matériels constitutif de l'ordinateur hôte local. Il s'agit d'une valeur de prévision, étant donné qu'elle est calculée préalablement à l'initiation du transfert de données envisagé. Cette valeur est établie exclusivement à partir de données de configuration et de caractéristiques techniques se rapportant au matériel de l'ordinateur sur lequel s'exécute l'agent de configuration 23. Ces valeurs sont ici obtenues directement de l'ordinateur local sans autre intervention de l'utilisateur. Bien sûr une telle intervention pourrait être prévue, en variante, dans certains cas très particuliers, par exemple pour mesurer l'effet d'une caractéristique sur la limitation du débit, sans pour autant modifier, dans un premier temps du moins, la configuration matériel de l'ordinateur local.

Dans le cas où un transfert de mémoire à mémoire est envisagé, et non de disque à disque, la valeur de *Bdisk* est ignorée pour l'application de la formule de l'annexe A.1.1.

Cette valeur *Rhardware* constitue une valeur-référence de limite d'émission/réception. Cette valeur peut servir de base à des opérations d'optimisation ultérieures. Dans le cas où l'une des valeurs limites ne pourrait être estimée, la fonction HrdDiag 37 et la fonction HrdCfg 25 peuvent être agencées pour émettre un message à destination de l'utilisateur. Dans ce cas, la formule de l'annexe A.1.1. est modifiée pour ne tenir compte que des valeurs disponibles, ou pour substituer une valeur estimée à une valeur impossible à calculer.

La formule de l'annexe A.1.1. ne prend pas en compte des paramètres tels que la charge de travail courante des unités CPU 13 ou du bus PCI 19, étant donné que ces paramètres sont par nature susceptibles de varier dans de larges mesures au cours du temps. Une prise en compte pertinente de ces paramètres exigerait leur mesure en temps réel, ce qui va à l'encontre de toute prévision d'une valeur de limite de débit. D'une certaine manière, le fait de ne pas prendre en compte ces paramètres constitue également un élément innovant important de l'outil de configuration proposé.

La fonction HrdDiag 37 peut appeler une fonction de diagnostic de disques, ou fonction HDdiag 51, agencée pour délivrer en sortie une valeur *Bdisk* établie conformément à la formule de l'annexe A.1.2., où

- *speed(HD)* représente une valeur de vitesse de disque maximale atteignable pour un disque considéré parmi les disques *HD* de l'ordinateur hôte local, et

- *speed(controller)* représente une valeur de vitesse maximale atteignable pour l'un des contrôleurs de disques de l'ordinateur hôte local.

La valeur associée à *Bdisk* par la fonction HDdiag 51 est la somme, sur l'ensemble des contrôleurs de disques du premier ordinateur 3, de la plus faible des valeurs de vitesse du groupe formé de la valeur de la vitesse d'un contrôleur de disques considéré et de la somme des valeurs de vitesse de l'ensembles des disques reliés à ce contrôleur. La valeur associée à *Bdisk* prend donc en compte la possibilité que le débit de transfert de données soit limité par la vitesse du ou des contrôleurs de disques HD 21.

Pour chaque disque *HD,* identifié par l'entrée 'name' dans l'objet 'hardwareconfig', la valeur associée à *speed (HD)* est égale à la plus petite des valeurs associées aux entrées 'readspeed' et 'writespeed' dans la branche 'HardDrive' du disque en question dans l'objet 'hardwareconfig'. En variante, la valeur associée à *speed(HD)* pourrait être une moyenne des valeurs associées aux entrées 'readspeed' et 'writespeed', éventuellement pondérée, ou l'une, prédéterminée, de ces deux valeurs.

Dans ce mode de réalisation, la fonction HDdiag 51 ne distingue pas la vitesse d'un disque lors d'une opération d'écriture de celle lors de opération de lecture. Ce choix est cohérent en ce qu'il simplifie d'une manière générale la programmation de la fonction HDDiag 51 et que l'écart qui sépare ces deux valeurs de vitesses est très faible pour les disques actuels.

En variante, la fonction HDDiag 51 peut être modifiée de manière à distinguer ces opérations de lecture et d'écriture. Ceci peut présenter un intérêt particulier si l'écart entre les vitesses d'écriture et de lecture venait à devenir trop important, par exemple du fait d'une nouvelle technologie de disques.

Dans ce cas, la valeur associée à *speed(HD)* pourrait être la vitesse d'écriture du disque ('writespeed') lorsque le disque se trouve sur l'ordinateur destinataire, et la vitesse de lecture du disque ('readspeed') lorsque ce disque se trouve sur l'ordinateur source.

Pour chacun des contrôleurs, la valeur associée à *speed(controller)* par la fonction HDdiag 51 correspond à la bande passante théorique associée à la valeur de l'entrée 'mode' des disques durs attachés au contrôleur en question dans l'objet 'hardwareconfig'.

Les valeurs susceptibles d'êtres associées à l'entrée 'mode'comprennent actuellement PIO, DMA, UDMA, SCSI ou encore SATA.

Les valeurs de vitesse associées peuvent être trouvées en annexe A.3.1.

La valeur *Bdisk* permet de prédire l'existence ou non de goulots d'étranglements liés à la vitesse des disques durs et à la vitesse des contrôleurs auxquels ces disques sont rattachés. La fonction HrdDiag 37 peut appeler une fonction de diagnostic mémoire, ou fonction RAMdiag 53, agencée pour délivrer en sortie une valeur *Bram* établie conformément à la formule de l'annexe A.1.3., où

- *DataWidth* représente la taille du mot que l'on peut écrire dans la mémoire RAM en une unique opération, c'est-à-dire la largeur du bus mémoire.
- *FrequencyRam* représente la fréquence de fonctionnement de la mémoire RAM, exprimée en nombre de cycles lecture/écriture qui peuvent être effectués par unité de temps. Cette valeur peut être obtenue de l'entrée 'frequency' de la branche CPU de l'objet 'hardwareconfig', ou lue dans les tables DMI.
- *Naccess* représente le nombre d'accès à la mémoire RAM 15 qui sont nécessaires pour transférer un "chunk" de données, c'est-à-dire un bloc de données composé de secteurs contigus du disque dur. Ici, *Naccess* vaut 4.

Autrement dit, la valeur associée à *Bram* par la fonction HDdiag 51 est le produit de la valeur *DataWidth* par la valeur *FrequencyRam* que divise la valeur *Naccess.*

La valeur *Bram* permet de prédire l'existence ou non d'un goulot d'étranglement lié à la mémoire RAM.

La fonction HrdDiag 37 peut appeler une fonction de diagnostic CPU, ou fonction CPUdiag 55, agencée pour délivrer en sortie une valeur *Bcpu* établie conformément à la formule de l'annexe A.1.4. Dans cette formule :

- *FrequencyCpu* est la fréquence de fonctionnement de l'unité CPU de l'ordinateur hôte local. Cette valeur peut être obtenue de l'entrée 'frequency' de la branche CPU de l'objet 'hardwareconfig', ou lue dans les tables DMI.
- *Ncpu* est une grandeur qui représente le nombre d'unités CPU 13 intégrées dans l'ordinateur hôte local. La valeur de *Ncpu* peut être obtenue à partir de la valeur associée à l'entrée 'number' de la branche 'CPU' de l'objet 'hardwareconfig'.
- *Ncore* est une grandeur qui représente le nombre de coeurs ("core") des unités CPU 13. La valeur de *Ncore* peut être obtenue à partir de la valeur associée à l'entrée 'corenumber' de la branche 'CPU' de l'objet 'hardwareconfig'.
- *MTUcoeff* est un coefficient représentant l'influence de la valeur de la grandeur MTU établie dans l'ordinateur hôte local.
- *OtherCoeff* est un coefficient global représentant l'influence de paramètres supplémentaires sur les performances de fonctionnement de l'unité CPU 13 au sein de l'ordinateur hôte local.

Selon la formule de l'annexe A.1.4., la valeur associée à *Bcpu* est égale au produit de la valeur *FrequencyCpu* par la valeur *Ncpu, Ncore, MTUcoeff* et *OtherCoeff.*

La fonction CPUdiag 55 est agencée pour établir une valeur du coefficient *MTUCoeff* conformément à la formule de l'annexe A.1.5. Dans cette formule :

- *mtu* représente la valeur du MTU, pour la ou les unités CPU, c'est-à-dire la taille maximale en octets d'un paquet de données pouvant être transmis en une seule fois. Cette valeur de MTU, généralement négociée entre le contrôleur NIC 17 et le commutateur/routeur auquel ce contrôleur NIC est relié, peut être obtenue du système d'exploitation. Ici, la valeur de *mtu* peut être obtenue de l'entrée 'mtu' de la branche 'NIC' de l'objet 'hardwareconfig'. Sous le système Linux par exemple cette valeur peut également être connue du système de fichiers "sysfs".

Le coefficient *MTUCoeff* est ainsi établi sur la base d'une donnée de MTU issue des données de fonctionnement de l'interface de communication réseau.

D'après la formule de l'annexe A.1.5., le coefficient *MTUCoeff* suit une évolution logarithmique en fonction de la donnée de MTU, entre une valeur maximale pour une valeur de MTU maximale et une valeur d'environ 0,8 pour une valeur de MTU minimale.

La fonction CPUdiag 55 est agencée pour établir une valeur du coefficient *OtherCoeff* conformément à la formule de l'annexe A.1.6. Dans cette formule :

- Le coefficient *Napi* caractérise un gain de performance de l'unité CPU 13 dû à un premier mode de fonctionnement particulier de l'ordinateur hôte local. Dans ce premier mode de fonctionnement, les échanges de données entre les unités CPU 13 et le contrôleur NIC 17 sont réalisés à intervalles réguliers plutôt que par des "interrupts", c'est-à-dire des requêtes d'interruption. L'API, appelée NAPI, utilisée avec le noyau GNU/linux autorise par exemple un tel fonctionnement.
  Une valeur typique du coefficient *Napi* est de 1,3 lorsque le premier mode de fonctionnement est détecté. Sinon la valeur de ce coefficient *Napi* est fixée à 1. L'information relative à l'existence ou non du premier mode de fonctionnement peut être obtenue à partir de l'entrée 'NAPI' de la branche 'NIC' de l'objet 'hardwareconfig'

- Le coefficient *NICinterruptCoalescing* caractérise un gain de performance des unités CPU 13 dû à un second mode de fonctionnement particulier de l'ordinateur hôte local, compatible avec le premier mode de fonctionnement. Dans ce second mode de fonctionnement, le contrôleur NIC 17 attend l'arrivée de plusieurs paquets de données, ou l'expiration d'un délai prédéterminé, avant d'émettre une requête d'interruption à destination du CPU.
  Une valeur typique du coefficient *NICinterruptCoalescing* est de 1,3 lorsque le second mode de fonctionnement est détecté. Sinon la valeur de ce coefficient *NICinterruptCoalescing* est fixée à 1.
  L'information relative à l'activation ou non de ce second mode de fonctionnement peut être obtenue de l'entrée 'coalescing' de la branche 'NIC' de l'objet 'hardwareconfig'

- Le coefficient *NICcomputingOffload* caractérise un gain de performance des unités CPU 13 dû à un troisième mode de fonctionnement de l'ordinateur hôte, compatible avec les premier et second modes de fonctionnement. Dans ce mode de fonctionnement, une partie de la pile TCP est déportée de la mémoire RAM 15 à la mémoire du contrôleur NIC 17. Il s'agit en particulier des parties de la pile liées à la vérification d'intégrité ("checksum") et à la fragmentation des données en paquets.
  La valeur de ce coefficient *NICcomputingOffload* est comprise entre 1,05 et 1,1 lorsque ce troisième mode de fonctionnement est détecté. Sinon la valeur de ce coefficient *NICcomputingOffload* est fixée à 1. Des valeurs différentes pour ce coefficient *NICcomputingOffload* peuvent être prises pour les opérations d'écriture et de lecture.
  L'information relative à l'activation ou non de ce troisième mode de fonctionnement peut être obtenue à partir de l'entrée 'coalescing' de la branche 'NIC' de l'objet 'hardwareconfig'.

- Le coefficient *DMA* caractérise un gain de performance des unités CPU dû à un quatrième mode de fonctionnement de l'ordinateur hôte, compatible avec les premier, second et troisième modes de fonctionnement. Dans ce quatrième mode de fonctionnement, l'ordinateur hôte local fonctionne conformément au standard DMA ("direct access memory" ou accès direct à la mémoire), c'est-à-dire que les unités CPU se sont pas sollicitées lors d'une opération de lecture puis d'écriture sur le disque. Une valeur typique de ce coefficient est de 1,25, lorsqu'un tel mode de fonctionnement est détecté et que le transfert est réalisé depuis le disque dur de l'ordinateur source jusqu'au disque dur de l'ordinateur destinataire. Lorsque le transfert de données est réalisé de la mémoire RAM 15 de l'ordinateur source à la mémoire RAM 15 de l'ordinateur destinataire, le coefficient DMA vaut 1, c'est-à-dire qu'on ne tient pas compte de ce quatrième état de fonctionnement.
  L'information relative à l'activation ou non de ce quatrième mode de fonctionnement peut être obtenue à partir de l'entrée 'DMA' de la branche 'HardDrive' de l'objet 'hardwareconfig'.

La fonction CPUdiag 55 est ainsi adaptée pour établir une valeur de limite d'émission/réception de données générale, en tant que produit des valeurs *FrequencyCpu, Ncpu,* et *Ncore,* établie exclusivement à partir de données de configuration matérielle des unités de traitement, et pour établir, en tant que valeur *Bcpu,* cette valeur de limite d'émission/réception de données générale adaptée à l'aide des coefficients spécifiques *MTUcoeff* et *OtherCoeff,* établis à partir de données de configuration ou de fonctionnement de l'interface de communication réseau.

La valeur *Bcpu* permet de prédire l'existence ou non d'un goulot d'étranglement lié aux unités CPU. Cette valeur présente une importance plus particulière avec les réseaux à très hauts débits, puisque l'influence des capacités de traitement ne peut plus être négligée devant les capacités du lien réseau.

La fonction HrdDiag 37 peut appeler une fonction de diagnostic de bus, ou fonction PCIdiag 57, agencée pour délivrer en sortie une valeur de *BPCI* établie conformément à la formule de l'annexe A.1.7. dans le cas où le bus PCI 19 est de type PCI ou PCI-X, et à la formule de l'annexe A.1.8 dans le cas où ce bus PCI 19 est de type PCI-Express. Dans ces formules :

- *DataWidth* représente la taille du mot que l'on peut écrire en une seule fois dans le bus, c'est-à-dire la largeur du bus PCI.

- *FreqencyPci* représente la fréquence de fonctionnement du bus PCI, laquelle peut être obtenue de l'objet hardware config'.

- Le coefficient *PCIcoeff* tient compte du mode de fonctionnement du bus PCI 19 en question, à savoir principalement en mode full-duplex ou half-duplex.

- La grandeur *Nlanes* représente le nombre de lignes, fixé, du bus de type PCI Express considéré.

- La valeur *speed* (*lane*) représente la vitesse individuelle de chacune de ces lignes.

- La valeur de *PCIcoeff* est égale à 0,5 dans le cas où le bus PCI 19 est de type PCI ou PCI-X, et à 0,8 lorsque ce bus est de type PCI-Express.
  Le type du bus PCI 19 peut être récupéré de la valeur associée à l'entrée 'type' de la branche 'PCI Bus' de l'objet 'hardwareconfig'.

La fonction HrdDiag 37 peut appeler une fonction de diagnostic de contrôleur réseau, ou fonction NICDiag59, agencée pour délivrer en sortie une valeur de *Bnic* établie conformément à la formule de l'annexe A.1.9. Dans cette formule :

- La grandeur *speed (NIC)* représente la vitesse du contrôleur NIC 17 considéré. Cette valeur peut être obtenue de la valeur associée à l'entrée 'speed' de la branche 'NIC' de l'objet *'hardwareconfig',* et

- le coefficient *MTUcoeff* représente la surcharge de bande passante qui résulte des protocoles de liaison de données, de réseaux et de transports utilisés, par rapport à la quantité de données qui doit être transférée du premier ordinateur 3 au second ordinateur 5.

La fonction NICDiag59 est agencée pour établir une valeur du coefficient *MTUcoeff* conformément à la formule de l'annexe A.1.10, où la grandeur *MTU* représente la valeur du MTU, évoquée plus haut.

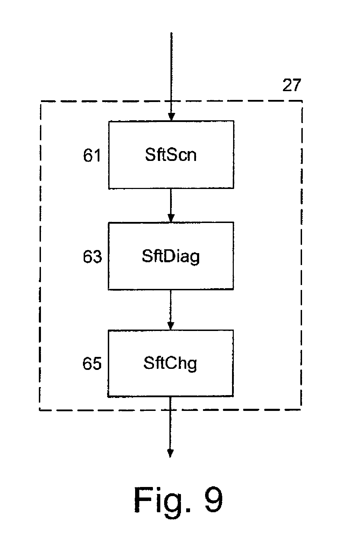

Il est fait référence à la figure 9.

La fonction SftCfg 27 est agencée pour appeler une fonction d'inspection logicielle, ou fonction SftScn 61, adaptée pour récupérer les valeurs d'un jeu de paramètres caractéristiques de la configuration logiciel de l'ordinateur hôte local, puis une fonction de diagnostic logiciel, ou fonction SftDiag, 63, adaptée pour établir une seconde valeur-référence de limite de débit d'émission/réception, liée à la configuration logicielle de l'ordinateur hôte, *Rsoftware,* à l'aide des valeurs du jeu de paramètres établies par la fonction SftScn 61 puis, en option, une fonction de modification de configuration, ou fonction SftChg 65, adaptée pour générer une configuration logicielle modifiée à partir du jeu de paramètres établis par la fonction SftScn 61.

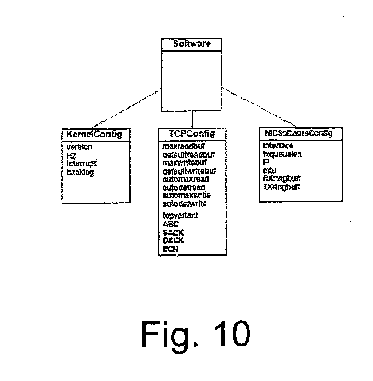

La figure 10 montre une représentation avantageuse d'un jeu de paramètres en question, sous la forme d'un objet informatique de type configuration logicielle, ou 'softwareconfig'.

Un objet de type 'softwareconfig' présente une structure arborescente comprenant un noeud 'KernelConfig', rassemblant les paramètres liés à la configuration du noyau du système d'exploitation de l'ordinateur hôte local, un noeud 'TCPConfig', rassemblant les paramètres liés au fonctionnement de la pile TCP dans cet ordinateur hôte local, et un noeud 'NICSoftwareConfig', rassemblant les paramètres liés au pilote du contrôleur NIC 17 de l'ordinateur hôte local.

Une branche 'KernelConfig' comprend une entrée *'version',* à laquelle peut être associé un identifiant de version du noyau du système d'exploitation, une entrée 'HZ', à laquelle peut être associée une valeur caractéristique du planificateur de ce noyau, une entrée 'Interrupt', à laquelle peut être associée une valeur de taux maximal de requêtes d'interruption à gérer par les unités CPU 13, et une entrée 'Backlog', à laquelle peut être associée une valeur représentant la taille maximale de la file d'attente de traitement de ces unités CPU 13.

Une branche 'TCPConfig" comprend une entrée 'maxreadbuffer', à laquelle peut être associée une valeur de taille maximum du tampon de lecture TCP, une entrée 'Defaultreadbuffer', à laquelle peut être associée une valeur de taille par défaut de ce tampon, une entrée 'maxwritebuffer', à laquelle peut être associée une valeur de taille maximum du tampon d'écriture TCP, une entrée 'defaultwritebuffer', à laquelle peut être associée une valeur de taille par défaut pour ce tampon, une entrée 'automaxread', à laquelle peut être associée une valeur de taille maximum pour l'ajustement automatique du tampon de lecture TCP, une entrée 'autodefread', à laquelle peut être associée une valeur de taille par défaut pour ce tampon, une entrée 'automaxwrite', à laquelle peut être associée une valeur de taille maximum pour le tampon d'ajustement automatique du tampon d'écriture TCP, une entrée 'autodefwrite', à laquelle peut être associée une valeur de taille par défaut pour ce tampon, une entrée 'TCPVariant', à laquelle peut être associé un identifiant de la version du protocole TCP, une entrée 'ABC', de type booléen, qui indique une configuration particulière de la pile TCP dans laquelle on compte la véritable quantité d'octets de données acquittés plutôt que les paquets acquittés pour mettre à jour la quantité de données qui peuvent être envoyées par l'ordinateur source à un instant donné (rfc 3465), une entrée 'DACK', à laquelle peut être associée une valeur indicatrice de l'émission par l'ordinateur hôte local d'un accusé de réception retardé, une entrée 'SACK', à laquelle peut être associée une valeur indiquant une émission d'accusé de réception sélective, et une entrée "ECN", de type booléen, qui représente une configuration de la pile TCP de l'émetteur dans laquelle cette dernière est capable de prendre en compte les notifications émises par les équipements réseaux intermédiaires, signalant en particulier une congestion ou un risque de congestion.

La branche ' NIC SofwareConfig' comprend une entrée 'txqueuelen', à laquelle peut être associée une valeur de taille de file d'attente de transmission du contrôleur NIC 17, une entrée 'MTU", à laquelle peut être associée une valeur de taille du MTU, une entrée 'Txringbuff', à laquelle peut être associée une valeur de taille du tampon d'émission, et une entrée ' Rxringbuff', à laquelle peut être associée une valeur de taille du tampon de réception.

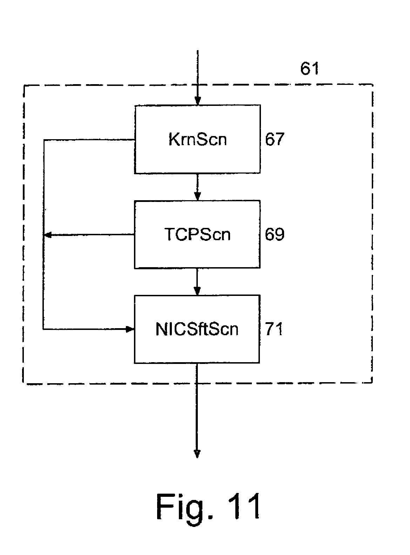

Il est fait référence à la figure 11.

La fonction SftScn 61 est agencée pour recevoir un objet de type 'softwareconfig' en tant qu'entrée et pour délivrer un objet de type 'softwareconfig' présentant des entrées renseignées en tant que sortie.

La fonction SftScn 61 peut être agencée pour appeler une fonction d'inspection du noyau, ou fonction KrnScn 67, adaptée pour renseigner les entrées de la branche 'KernelConfig' de l'objet 'SoftwareConfig'. La fonction KrnScn 67 peut être agencée pour appeler le pseudo-système de fichiers "procfs" du système d'exploitation GNU/Linux, qui est capable d'exporter des informations du noyau sur les processus, ce qui permet de renseigner lesdites entrées.

La fonction SftScn 61 peut en outre être agencée pour appeler une fonction d'inspection de pile TCP, ou fonction TCPScn 69, adaptée pour renseigner les entrées de la branche 'TCPConfig' de l'objet 'sofwareconfig'. La fonction TCPScn 69 peut être agencée pour appeler"procfs", mentionné ci-dessus et capable de renvoyer les informations nécessaires aux renseignements desdites entrées.

La fonction SftScn 61 peut être agencée pour appeler une fonction d'inspection de pilote réseau, ou fonction NICSftScn 71, adaptée pour renseigner les entrées de la branche 'NICSoftwareConfig' de l'objet 'softwareconfig'. La fonction NICSftScn 71 peut être agencée pour appeler le pseudo-système de fichier "sysfs" du système d'exploitation GNU/Linux, qui est capable de renvoyer des informations sur les pilotes et le matériel du noyau vers l'espace utilisateur et renseigner les valeurs à associer aux entrées 'TXqueuelen' et 'MTU' et le programme "ethtool", fonctionnant également sous le système d'exploitation GNU/Linux, pour renseigner les entrées 'TXringbuff' et 'RXringbuff'.

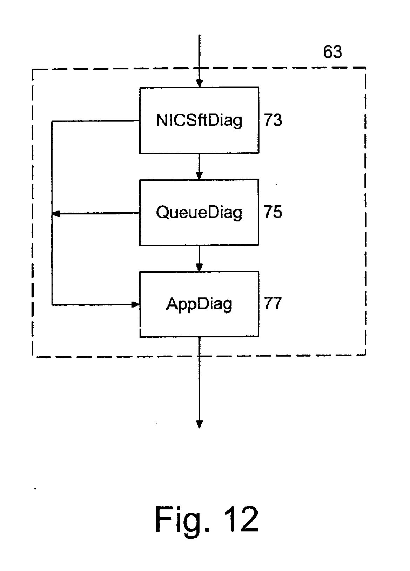

Il est fait référence à la figure 12.

La fonction SftDiag63 est agencée pour recevoir un objet de type 'SoftwareConfig' en tant qu'entrée et délivrer la valeur *Rsoftware* en tant que sortie.

La fonction SftDiag63 est agencée pour établir la valeur *Rsoftware* conformément à la formule de l'annexe A. 2.1. Dans cette formule :

- *Bnic* correspond à une sixième valeur prédictive de limite de débit d'émission/réception établie en tenant compte de la configuration du pilote du contrôleur NIC 17 de l'ordinateur hôte, en particulier la quantité de données qu'il est possible de faire transiter à travers le tampon de ce contrôleur.

- *Bqueue* correspond à une septième valeur prédictive de limite de débit d'émission/réception établie en tenant compte de la configuration du noyau du système d'exploitation, en particulier la bande passante atteignable lorsque le noyau procède à la copie de paquets de données de la file d'attente logiciel des unités CPU 13 à destination du tampon de la pile TCP ou du tampon de cette pile TCP vers la file d'attente de transmission lorsque l'ordinateur hôte local se trouve être l'ordinateur source.

- *Bapplication* représente une valeur de l'application, en particulier, la vitesse de transfert de données maximale que l'application utilisée pour le transfert est capable de lire ou d'écrire dans le tampon TCP au cours du transfert, cette valeur pouvant être déterminée par la quantité de données qui sont "poussées" sur le réseau 7.

La valeur associée à *Rsoftware,* retournée par la fonction SftDiag 63, prend ici la valeur de la plus petite des valeurs du groupe formé des valeurs de *Bnic, Bqueue* et *Bapplication.* Elle est ainsi établie conformément à des règles prédéfinies à partir de ces valeurs limites prédictives.

L'agent local permet d'obtenir une seconde valeur-référence de limite de débit, qui caractérise l'ensemble des éléments logiciels opérant lors d'un échange de données au travers d'un réseau. Telle qu'elle est ici établie, cette seconde valeur-référence caractérise efficacement un goulot d'étranglement lié aux éléments logiciels des ordinateurs impliqués dans un échange de données au travers du réseau. Cette seconde valeur-référence peut être comparée à d'autres valeurs de débit. En particulier, la seconde valeur-référence peut être comparée à la première valeur-référence. Ceci permet notamment de déterminer s'il est pertinent de rechercher des améliorations dans la configuration logiciel de l'ordinateur en question : tel ne sera pas le cas, par exemple, lorsque la seconde valeur-référence sera supérieure à la première valeur-référence (car le débit se trouve alors limité par la configuration matérielle de l'ordinateur), ou lorsque la seconde valeur-référence de l'ordinateur local est supérieure à la seconde valeur-référence de l'ordinateur distant (les amélioration de configuration logiciel sont alors à rechercher sur cet ordinateur distant).

Comme pour la première valeur-référence, le Demandeur a réussi à identifier l'ensemble des éléments de logiciel susceptibles d'avoir une influence sur le débit effectif de l'échange de données. Du fait des grandeurs prises en compte, cette seconde valeur-référence est pratiquement indépendante de la configuration matérielle de l'ordinateur hôte.

Chacune des valeurs prédictives *Bnic, Bqueue, Bapplication* est caractéristique de l'influence d'un élément logiciel considéré indépendamment des autres. Autrement dit, le Demandeur est parvenu à isoler les éléments de logiciel pertinent et à caractériser leur influence dans un transfert de données.

La valeur *Rsoftware* représente la bande passante maximale qui peut être obtenue avec une configuration de logiciel donnée de l'ordinateur hôte local.

La fonction SftDiag 63 peut appeler une fonction de diagnostic logiciel du contrôleur NIC 17, ou fonction NICSftDiag73, agencée pour délivrer en sortie une valeur *Bnic* établie conformément à la formule de l'annexe A 2.2. Dans cette formule :

- *BufferRing* représente une valeur du tampon du contrôleur NIC 17.

- *InterruptRate* est une valeur représentant le taux de requête d'interruption que le noyau du système d'exploitation peut traiter. Cette valeur peut être obtenue à partir de la valeur associée à l'entrée 'Interrupt' de la branche "KernelConfig' de l'objet 'SoftwareConfig'.

- *MTU* correspond à un coefficient de normalisation destiné à convertir les valeurs obtenues du noyau de ce système d'exploitation en octets, plutôt qu'en paquets de données. Typiquement, *MTU* est égal à 1500 que multiplie 8 que divise 1 000000, c'est-à-dire correspond à la conversion en méga-octets par seconde de la valeur de MTU utilisée dans les trames Ethernet.

La valeur associée à *BufferRing* diffère selon que le tampon considéré est celui de l'émission ou de la réception. La formule de l'annexe A.2. comprend en réalité deux formules selon que l'ordinateur hôte local joue le rôle d'émetteur ou de récepteur dans le transfert de données disques à disques.

La valeur du *BufferRing* en question peut être obtenue à partir des valeurs associées respectivement aux entrées 'TXringbuff' et 'RXringbuff' dans la branche 'NICSoftwareConfig' de l'objet 'SofwareConfig'.

La fonction SftDiag 63 peut appeler une fonction de diagnostic de file d'attente, ou fonction QueueDiag 75, adaptée pour délivrer en sortie une valeur de *Bqueue* établie conformément à la formule de l'annexe A.2.3., dans le cas où l'ordinateur hôte local joue le rôle de récepteur dans la transmission de données disque à disque, et conformément à la formule de l'annexe A.2.4. lorsque l'ordinateur hôte local joue le rôle d'émetteur dans cette transmission de données. Dans ces formules :

- *Backlog* représente la taille maximale de la file d'attente de traitement des unités CPU 13. Cette valeur peut être obtenue à partir de la valeur associée à l'entrée 'Backlog' de la branche 'KernelConfig' de l'objet 'SoftwareConfig'.

- HZ correspond à la granularité minimale du planificateur du noyau du système d'exploitation de l'ordinateur Hôte local. Cette valeur peut être obtenue à partir de la valeur associée à l'entrée 'HZ' de la branche 'KernelConfig' de l'objet 'SoftwareConfig'.

- *MTU est* une valeur analogue à la valeur MTU de la figure A.2.2..

- *TXQueueLen* est une valeur qui représente la taille de la file d'attente de transmission de la partie logicielle du contrôleur NIC 17. Cette valeur peut être obtenue à partir de la valeur associée à l'entrée 'TXQueueLen' de la branche 'NICSoftwareConfig' de l'objet 'SoftwareConfig'.

La valeur associée à HZ permet d'avoir une estimation du nombre de tâches élémentaires que peut effectuer le noyau du système d'exploitation par unité de temps. Une tâche élémentaire peut être une copie de données de la file d'attente du noyau à la mémoire tampon de l'application. Il s'agit là d'une limite supérieure.

La fonction SftDiag 63 peut appeler une fonction de diagnostic d'application, ou fonction AppDiag 77, agencée pour délivrer en sortie une valeur *Bapplication* établie conformément à la formule de l'annexe A.2.5. Dans cette formule :

- *BufferTCP* représente la taille de la mémoire tampon de la pile TCP, considérée en lecture ou en écriture suivant le rôle joué par l'ordinateur hôte local dans la transmission de données disque à disque. Cette valeur peut être obtenue respectivement à partir des valeurs associées aux entrées 'maxreadbuffer' et 'maxwritebuffer' de la branche 'TCPConfig'.

- *'RTT'* représente le temps d'aller-retour moyen d'un paquet de données entre la source et la destination, laquelle valeur de temps peut être obtenue par exécution d'une requête de type "ping"

La fonction SftChg 65 est agencée pour recevoir en tant qu'entrée un objet de type 'SoftwareConfig'et pour générer un objet 'SoftwareConfig'modifié. Cet objet modifié est déterminé de manière à définir une configuration logiciel adaptée pour atteindre une valeur de *RTT* visée. La fonction SftChg 65 est agencée pour recevoir certains au moins des arguments suivant :

- un booléen indiquant si l'ordinateur local est l'ordinateur source ou l'ordinateur destinataire,
- un identifiant de l'interface du contrôleur NIC 17 concernée par le transfert, par exemple sous la forme d'une chaîne de caractères,
- une valeur cible de *RTT* pour le chemin entre le premier ordinateur 3 et le second ordinateur 5, par exemple exprimée en millisecondes par un entier flottant,
- une valeur cible de débit, tel que souhaité par l'utilisateur, par exemple exprimée en mégaoctets par seconde,
- un identifiant de fichier informatique où écrire la nouvelle configuration. L'ancienne configuration peut également être sauvée afin de prévenir d'éventuels problèmes.

La valeur cible de débit peut par exemple prendre la valeur de la première valeur-référence de débit limite, en particulier lorsque la seconde valeur-référence de limite de débit établie par la fonction SftCfg 27 se trouve inférieure cette première valeur-référence.

Par défaut, on peut également considérer que l'émetteur est tel qu'un transfert est possible à environ 100 millisecondes et vitesse visée de 1000 mégaoctets par seconde.

Ici, la fonction SftChg 65 est agencée de manière à modifier les valeurs des entrées relatives à taille de la mémoire tampon de la pile TCP, de l'entrée 'txqueulen' relative à la taille file d'attente de transmission du contrôleur NIC 17, de l'entrée 'Backlog' relative à la taille maximale de la file d'attente de traitement des unités CPU 13 et des entrées 'Txringbuff' et 'Rxringbuff' relatives à la taille du tampon d'émission/réception. Les valeurs associées aux entrée 'RTT', 'MTU', ainsi que le débit cible sont au contraires conservés fixes.

Les valeurs des entrées modifiées sont injectées dans les formules A.2.5 à A.2.2 en sorte d'établir une configuration de logiciel optimisée. Finalement, la mesure dans laquelle ces grandeurs sont modifiées dépend de la valeur de débit cible fixé par l'utilisateur. Ces modifications ne nécessitent aucune nouvelle compilation du noyau.

En complément, la valeur associée à l'entrée 'HZ' peut également être modifiée, une nouvelle compilation du noyau étant alors prévue.

L'appel de la fonction SftChg 65 par la fonction SftCfg 27 peut être systématique ou conditionnel. Par exemple, la fonction SftChg 65 peut être agencée pour n'appeler la fonction SftCfg 27 que lorsque la première valeur-référence de limite de débit est supérieure à la seconde valeur-référence de limite de débit, ou autrement dit, lorsque la configuration logiciel de l'ordinateur hôte local limite de débit prévisible au regard du débit autorisé par la configuration matériel de cet ordinateur.

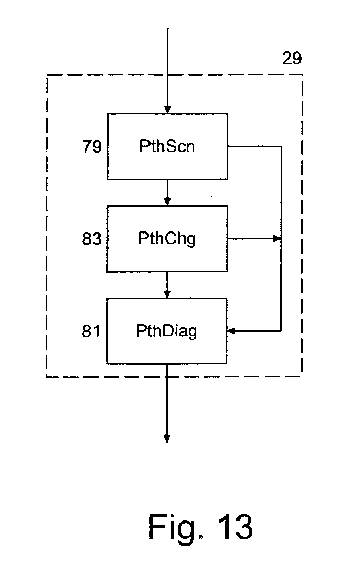

Il est fait référence à la figure 13.

La fonction PthCfg 29 est agencée pour appeler une fonction d'inspection réseau, ou fonction PthScn79, adaptée pour récupérer un jeu de paramètres caractéristiques de la liaison entre le premier ordinateur 3 et le second ordinateur 5, puis une fonction de diagnostic réseau, ou fonction PthDiag 81, adaptée pour établir une valeur limite de débit d'émission/réception tenant compte de la configuration du réseau *Rnetwork* à l'aide du jeu de paramètres établi par la fonction PthScn79.

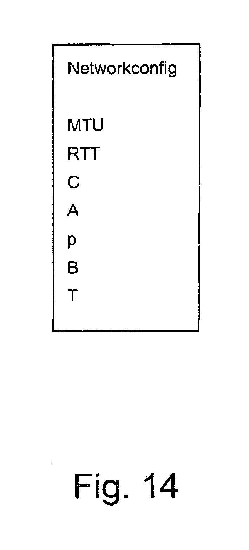

La figure 14 montre une représentation avantageuse d'un jeu de paramètres en question, sous la forme d'un objet informatique de type configuration réseau, ou "networkconfig".

Un objet du type 'networkconfig' présente une structure de liste comprenant une entrée 'MTU', à laquelle peut être associée la valeur de MTU négociée entre le contrôleur NIC 17 et le point d'accès correspondant, une entrée 'RTT', une entrée 'C', à laquelle peut être associée une valeur de capacité liée au goulot d'étranglement du réseau 7, une entrée 'A', à laquelle peut être associée une valeur de bande passante disponible, une entrée 'p' à laquelle peut être associée une valeur de taux de perte de données, une entrée 'B', à laquelle peut être associée une valeur d'espace de mémoire tampon maximum au niveau du goulot d'étranglement du réseau, et une entrée 'T', à laquelle peut être associée une valeur de durée nécessaire à l'accomplissement d'un transfert d'une quantité prédéterminée d'octets.

La fonction PthScn79 est agencée pour récupérer un objet de type 'networkConfig' en entrée et à retourner, en sortie, un objet de ce type avec des valeurs associées.

La fonction PthScn 79 lance un transfert élémentaire d'une quantité de *V* octets, par exemple en utilisant le programme "iperf" [http://sourceforge.net/projets/iperfl/] qui permet d'obtenir une estimation du temps minimum nécessaire pour effectuer un transfert d'une quantité Vde données.

La fonction PthScn 79 peut être agencée pour appeler l'outil système "ifconfig" ou "ethtool", lesquels sont capables de donner une estimation de la valeur du MTU.

La fonction PthScn 79 peut en outre être agencée pour exécuter une commande "ping", laquelle permet d'obtenir une valeur à associer à l'entrée 'RTT'.

Cette fonction peut également être agencée pour appeler le programme "pathload" [http://www.cc.gatech.edu/fac/constantinos.dovrolis/bw-est/pathload.html], disponible sous le système d'exploitation GNU/Linux, et capable de renvoyer certaines caractéristiques du réseau, telles que la bande-passante disponible ou la capacité du goulot d'étranglement, ce qui permet d'obtenir les valeurs à associer aux entrées 'C' et 'A'.

La fonction PthScn 79 peut être agencée pour utiliser, en option, la bibliothèque"web100" [http://www.web100.org/], qui permet d'intercepter l'évolution des variables de la pile TCP dans le système GNU/Linux, ou la commande Unix "netstat" pour obtenir une valeur à associer à l'entrée 'B'.

Enfin, cette fonction PthScn 79 peut être agencée pour appeler le programme "iperf", disponible sous le système d'exploitation GNU/Linux, pour obtenir les données nécessaires à associer à l'entrée 'T'.

À ce jour, l'utilisation de "web100" est privilégiée. D'autres choix peuvent s'avérer pertinents, en particulier selon les logiciels disponibles sur les ordinateurs sources et destinataires.

La fonction PthDiag 81 est agencée pour retourner en tant que valeur *Rnetwork* la plus petite valeur parmi le groupe formé de 'C', 'A' et 'V/T'.

La fonction PthDiag 81 établit ainsi une troisième valeur-référence de limite de débit d'émission/réception à en fonction des valeurs 'C', 'A' et' V/T' à partir de règles préétablies. Cette troisième valeur-référence caractérise l'influence, dans un transfert de données, des caractéristiques du lien réseau entre l'ordinateur hôte et l'ordinateur distant. Telle qu'elle est établie, cette troisième valeur-référence peut être comparée à d'autres valeurs de débit. En particulier, la troisième valeur-référence peut être comparée à la première valeur-référence et/ou à la seconde valeur-référence.

Ici, la fonction PthCfg 29 est en outre agencé pour appeler une fonction d'optimisation de lien réseau, ou fonction PthChg 83. L'appel de cette fonction PthChg 83, en tout état de cause optionnelle, peut être systématique ou conditionnel. La fonction PthCfg 29 peut par exemple n'appeler la fonction PthChg 83 que lorsque la troisième valeur-référence est inférieure à la fois à la première valeur-référence et à la seconde valeur-référence. Ceci revient à n'optimiser le lien réseau que dans le cas où un gain de débit global est espéré, c'est-à-dire lorsque, par ailleurs, ce débit n'est pas limiter par la configuration logiciel et matériel de l'ordinateur local et/ou distant.

La fonction PthChg 83 est agencée pour appeler répétitivement le programme "iperf" pour envoyer la même quantité de données '*V*', à chaque fois divisée en un nombre différent de connexions. Après chaque exécution de "iperf", la fonction PthChg 83 appelle la fonction PthDiag 81 pour obtenir une estimation de *Rnetwork* correspondante. La fonction PthChg 83 établit ainsi le nombre de courants parallèles qui conduit aux meilleures performances sur le réseau 7.

La fonction PthChg 83 est en outre agencée pour appeler de manière répétitive le programme "iperf" avec la même quantité V de données en utilisant des variantes du protocole 'TCP' différentes les unes des autres et disponibles sur le système. Chaque exécution de "iperf" est suivi d'un appel de la fonction PthDiag 81 pour obtenir une estimation de *Rnetwork* correspondante. La fonction PthChg 83 détermine ainsi la plus performante de ces variantes. La fonction PthChg 83 peut être agencée pour modifier la variante du contrôle de congestion de TCP utilisée dans le noyau et pour vérifier les performances obtenues.

Dans un mode de réalisation particulier, l'un au moins un premier ordinateur 3 et du second ordinateur 5 prend la forme d'un boîtier administrable à distance, par exemple au travers du réseau d'échange de données. Dans ce mode de réalisation, un nouveau noyau, recompilé avec la configuration logicielle optimale, est rechargé à distance.

Dans un autre mode de réalisation particulier, l'outil de configuration 23 est implémenté sous la forme d'un service. Cet outil peut alors être utilisé en combinaison d'un système à réservation de bande passante pour réserver la quantité de passante juste nécessaire au transfert entre le premier ordinateur 3 et le second ordinateur 5. Ceci évite la réservation d'une quantité de bande passante inatteignable par ces ordinateurs.

L'outil décrit ci-dessus permet d'abord d'obtenir une valeur prédictive de débit de transfert de données, qui tient compte de la configuration des éléments matériels et logiciels des ordinateurs local et/ou distant, ainsi que des caractéristiques du lien réseau entre ces ordinateurs. Il permet ensuite d'obtenir un diagnostic sur les éléments qui sont susceptibles de constituer un goulot d'étranglement lors du transfert effectif. Il offre encore des possibilités d'optimisation de ces éléments et du lien. Finalement, il permet une optimisation des conditions de transfert de données, avant même l'initialisation du transfert en question. Ceci revêt une grande importance lorsque le transfert concerne une quantité importante de données, si bien qu'une variation, même faible, du débit a des conséquences en termes de temps importantes.

Certaines valeurs prédictives de débit tiennent compte des caractéristiques du transfert envisagé, tout comme certaines des optimisations proposées par l'outil en question. D'autres valeurs prédictives, comme celle caractérisant la configuration matérielle de l'ordinateur, sont indépendantes des caractéristiques du transfert envisagé.

L'invention n'est pas limitée aux modes de réalisation décrits ci-dessus, à titre d'exemple uniquement, mais englobe toutes les variantes que pourra envisager l'homme de l'art, et en particulier :

- Bien que l'outil de diagnostic ait été décrit en relation avec le protocole de transmission/réseau TCP/IP, il peut être adapté pour opérer en relation avec tout autre protocole, en particulier basé sur un transfert de données en paquets. Dans ce dernier cas, seule la formule de l'annexe A.1.10 devra être adaptée aux caractéristiques du protocole choisi.

- Bien que la fonction SftCfg 27 ait été agencée pour prendre en compte des caractéristiques du noyau du système d'exploitation, il n'est pas exclu de modifier cette fonction de manière qu'elle prenne en compte la configuration d'autres logiciels, opérant lors d'un transfert de données, pour peu que la configuration de ces logiciels ait une influence effective sur le débit de transfert de données et que cette influence puisse être évaluée de manière pertinente, c'est-à-dire en particulier puisse être évaluée d'une manière qui permette sa comparaison aux autres valeurs-références.

- En fonction des évolutions des infrastructures, matérielles, de logiciel et/ou de réseau, l'outil de diagnostic pourra être modifié de manière à prendre en compte les évolution en question, ce qui peut se traduire par des modifications ponctuelles de certaines des formules décrites, par l'ajout ou la suppression de fonctions de calcul de valeurs de débit prédictives, par l'ajout ou la suppression de fonctions de diagnostic, ou par l'ajout ou la suppression de fonctions d'optimisation.

- Les formules décrites et mises en oeuvre dans les différentes fonctions de l'outil de diagnostic ont été établies de manière à rendre compte de l'influence respective, dans un transfert de données, de différents éléments matériels, de logiciel et du lien réseau. Ces formules sont telles quelles permettent une comparaison pertinente de l'influence respective de ces éléments et du lien réseau. Pour autant, cela n'exclu pas que certaines au moins de ces formules soient à l'avenir modifiées, par exemple pour rendre compte d'une manière plus précise encore de l'influence d'un élément en particulier ou d'un élément supplémentaire. Par exemple, il serait possible de rendre compte de la manière dont les unités CPU 13 interagissent avec la mémoire RAM en fonction de l'architecture même de ces unités CPU.

On a décrit des caractéristiques optionnelles de l'invention, complémentaires ou de remplacement, notamment:

- L'outil comprend en outre une fonction de modification de configuration logicielle capable de modifier activement certaines au moins des données parmi le groupe formé des données de configuration de mémoire tampon de l'interface réseau, de données de configuration de file d'attente TCP, et de configuration de l'application de transfert de données, et l'agent local est agencé pour, sur appel, recevoir une valeur-cible de limite de débit d'émission ou de réception de données, pour appeler la fonction de diagnostic logiciel et pour appeler la fonction de modification de configuration dans le cas où la second valeur-référence est inférieure à ladite valeur-cible.

- L'agent local comprend en outre une neuvième fonction adaptée pour établir une neuvième valeur prédictive de limite de débit d'émission ou de réception de données à partir de données de performance de chemin réseau, et est agencé pour, sur appel préalable à un transfert de données, lancer la neuvième fonction et pour retourner une troisième valeur-référence de débit d'émission ou de réception de données en tant que grandeur d'intérêt en liaison avec ladite valeur-référence de débit d'émission ou de réception de données.

- L'outil comprend en outre un agent distant exécutable sur une machine informatique comportant de la mémoire vive, une ou plusieurs unités centrales de traitement, et une ou plusieurs interfaces de communication avec le réseau d'échange de données de l'ordinateur sur lequel s'exécute l'agent local, les interfaces étant reliées à la mémoire vive par l'intermédiaire d'un bus de transfert de données, ledit agent distant étant similaire à l'agent local.

L'agent local comprend en outre une fonction de modification de paramètres de protocole TCP et, sur appel, lance ladite fonction de modification de paramètres avec un jeu prédéterminé de paramètres de configuration puis ladite fonction de diagnostic logiciel, ladite seconde valeur -référence pouvant être comparée à une valeur-cible de débit d'émission ou de réception de données.

Bien entendu l'invention trouve des applications aussi bien dans le cas de machines (serveurs) physiques que virtuelles associées le cas échéant à un hyperviseur/mécanisme de partage des ressources entre les différentes machines virtuelles et qui peuvent également éventuellement ponctionner des ressources.

Annexe 1 - Formules

A.1.1
Rhardware = min (Bdisk, Bram, Bcpu, Bnic, Bpci)
A.1.2

$$Bdisk = \sum_{controller} \min(speed(controller), \sum_{HD \in controller} speed(HD))$$

A.1.3
Bram = DataWidth* FrequencyRam/Naccess
A.1.4
Bcpu = FrequencyCpu * Ncpu * Ncore * MTUcoeff * OtherCoeff  A.1.5

$$MTUcoeff = 1 - \frac{0.2}{In(8000) - In(1500)} * (In(8000) - In(mtu))$$

A.1.6
OtherCoeff = Napi*NICinterruptCoalescing*NICcomputingOffload*DMA
1.1.7
Bpci = DataWidth*FrequencyPci* PCIcoeff
A.1.8
Bpci = Nlanes*speed(lane) * PCIEcoeff
A.1.9
Bnic = speed(NIC)*MTUcoeff
A.1.10

$$MTUcoeff = \frac{MTU - 52}{MTU - 14 - 4 - 12 - 8}$$

Annexe 2 - Formules

A.2.1
Rsoftware = min(Bnic, Bqueue, Bapplication)
A.2.2
Bnic = BufferRing*InterruptRate * MTU
A.2.3
Bqueue = Backlog * HZ * MTU
A.2.4
Bqueue = TxQueueLen * HZ * MTU
A.2.5
Bapplication = BufferTCP * RTT

Annexe 3 - Données numériques

A.3.1.1

| mode | Débit en Mbs |
|------|--------------|
| PIO  |              |

(suite)

| mode | Débit en Mbs |
|------|--------------|
| pio0 | 26.4 |
| pio1 | 41.6 |
| pio2 | 66.4 |
| pio3 | 88.8 |
| pio4 | 133.3 |
| ATA DMA | |
| mdma0 | 33.6 |
| mdma1 | 106.4 |
| mdma2 | 133.6 |
| udma0 | 133.6 |
| udma1 | 200 |
| udma2 | 266.4 |
| udma3 | 355.2 |
| udma4 | 531.2 |
| udma5 | 800 |
| udma6 | 1064 |
| SATA | |
| sata-150 | 1500 |
| sata-300 | 3000 |
| sata-600 | 4800 |
| SCSI | |
| fast | 160 |
| ultra | 320 |
| ultra-2 | 640 |
| ultra-3 | 1280 |
| ultra-320 | 2560 |
| ultra-640 | 5120 |

**Revendications**

1. Outil informatique comprenant un agent local (23) de prétransfert, exécutable sur une machine informatique (3,5) comportant de la mémoire vive (15), une ou plusieurs unités centrales de traitement (13), et une ou plusieurs interfaces de communication (17) avec un réseau d'échange de données (7) reliées à la mémoire vive (15) par l'intermédiaire d'un bus de communication (19), **caractérisé en ce que** ledit agent (23) comprend :

   - une première fonction (53) adaptée pour établir une première valeur prédictive de limite de débit d'émission ou de réception de données, à partir de données de configuration matérielle relatives à la mémoire,
   - une seconde fonction (55) adaptée pour établir une seconde valeur prédictive de limite de débit d'émission ou de réception de données, à partir de données de configuration matérielle relatives aux unités de traitement,
   - une troisième fonction (57) adaptée pour établir une troisième valeur prédictive de limite de débit d'émission ou de réception de données, à partir de données de configuration matérielle relatives au bus de communication,
   - une quatrième fonction (59) adaptée pour établir une quatrième valeur prédictive de limite de débit d'émission ou de réception de données, à partir de données de configuration matérielle relatives à l'interface de communication, et
   - une fonction de diagnostic matériel (25 ; 35 ; 37) agencée pour appeler chacune des première, seconde, troisième et quatrième fonctions, et pour établir, à partir des première, seconde, troisième et quatrième valeurs prédictives de limite de débit résultantes, une valeur-référence de débit d'émission ou de réception de données conformément à des règles prédéfinie de comparaison desdites valeurs prédictives,
   - l'agent local (23) étant agencé pour, sur appel préalable à un transfert de données, lancer la fonction de diagnostic matériel (37) et pour retourner ladite valeur-référence de débit d'émission ou de réception de données en tant que grandeur d'intérêt en liaison avec au moins une autre grandeur de débit d'émission ou de réception de données.

2. Outil selon la revendication 1, dans lequel l'agent local comprend en outre:

- une première fonction d'inspection (43) capable de rassembler des données de configuration mémoire,
- une seconde fonction d'inspection (45) capable de rassembler des données de configuration des unités centrales de traitement,
- une troisième fonction d'inspection (47) capable de rassembler des données de configuration du bus de transfert de données,
- une quatrième fonction d'inspection (49) capable de rassembler des données de configuration de l'interface de communication réseau,

et dans lequel

- la fonction de diagnostic matériel (25 ; 35; 37) est adaptée pour appeler chacune de ces fonctions d'inspection afin d'obtenir un ensemble de jeux de données de configurations et pour appeler chacune desdites première (53), seconde (55), troisième (57) et quatrième (59) fonctions avec, à chaque fois, l'un au moins de ces jeux de données.

3. Outil selon l'une des revendications 1 et 2, dans lequel l'agent local comprend en outre:

- une cinquième fonction (51) adaptée pour établir une cinquième valeur prédictive de limite de débit d'émission ou de réception de données, à partir de données de configuration matérielle relatives à des supports de stockage permanent de données,

et dans lequel,

- la fonction de diagnostic matériel (25 ; 35 ; 37) est adaptée pour appeler cette cinquième fonction (51) et pour établir ladite valeur-référence en tenant compte en outre de la cinquième valeur de limite de débit d'émission ou de réception.

4. Outil selon l'une des revendications précédentes, dans lequel

- la seconde fonction (55) est adaptée pour établir une valeur de limite d'émission/réception de données générale, établie exclusivement à partir de données de configuration matérielle des unités de traitement, et pour établir, en tant que seconde valeur de limite de débit d'émission/réception, ladite valeur de limite d'émission/réception de données générale adaptée à l'aide d'un ou plusieurs coefficients spécifiques, établis à partir de données de configuration ou de fonctionnement de l'interface de communication réseau.

5. Outil selon la revendication 4, dans lequel les coefficients spécifiques comprennent au moins un premier coefficient établi sur la base d'une donnée de MTU issue des données de fonctionnement de l'interface de communication réseau (17).

6. Outil selon la revendication 5, dans lequel la seconde fonction (55) est adaptée pour établir ledit premier coefficient selon une évolution logarithmique en fonction de ladite donnée de MTU, entre une valeur maximale pour une valeur de MTU maximale et une valeur d'environ 0,8 pour une valeur de MTU minimale.

7. Outil selon l'une des revendications 4 à 6, dans lequel les coefficients spécifiques comprennent un ou plusieurs coefficients parmi le groupe formé de:

- un premier coefficient d'augmentation de performance lorsque les données de configuration de l'interface comprennent une donnée indiquant un mode fonctionnement à interrogation régulière de l'interface,
- un second coefficient d'augmentation de performance lorsque les données de configuration comprennent une donnée indiquant un mode de fonctionnement à accumulation de paquets de données reçus avant émission de requête d'interruption,
- un troisième coefficient d'augmentation de performance lorsque les données de configuration comprennent une donnée indiquant un mode de fonctionnement à déplacement d'une partie de la pile TCP dans une mémoire de l'interface,
- un quatrième coefficient d'augmentation de performance lorsque les données de configuration comprennent une donnée indiquant un mode de fonctionnement DMA.

**8.** Outil selon la revendication 7, dans lequel les coefficients spécifiques comprennent l'ensemble des coefficients dudit groupe.

**9.** Outil selon l'une des revendications précédentes, dans lequel l'agent local (23) comprend en outre:

- une sixième fonction (73) adaptée pour établir une sixième valeur prédictive de limite de débit d'émission ou de réception de données, à partir de données de configuration de mémoire tampon de l'interface réseau,
- une septième fonction (75) adaptée pour établir une septième valeur prédictive de limite de débit d'émission ou de réception de données, à partir de données de configuration de file d'attente TCP,
- une huitième fonction (77) adaptée pour établir une huitième valeur prédictive de limite de débit d'émission ou de réception de données, à partir de données de configuration de l'application de transfert de données,
- une fonction de diagnostic logiciel (61, 63 ; 27) agencée pour appeler chacune des sixième (73), septième (75), huitième (77) fonctions, et pour établir, à partir des sixième, septième, et huitième valeurs prédictives de limite de débit résultantes, une seconde valeur-référence de débit d'émission ou de réception de données conformément à des règles prédéfinie de comparaison desdites valeurs prédictives,
- l'agent local (23) étant agencé pour, sur appel préalable à un transfert de données, lancer la fonction de diagnostic logiciel (61, 63 ; 27) et pour retourner ladite seconde valeur-référence de débit d'émission ou de réception de données en tant que grandeur d'intérêt en liaison avec ladite valeur-référence de débit d'émission ou de réception de données.

**10.** Outil selon la revendication 9, comprenant en outre

- une sixième fonction d'inspection (67) capable de rassembler des données de configuration de mémoire tampon de l'interface réseau,
- une septième fonction d'inspection (69) capable de rassembler des données de configuration de file d'attente TCP,
- une huitième fonction d'inspection (71) capable de rassembler des données de configuration de l'application de transfert de données,

et dans lequel

- la fonction de diagnostic logiciel (61, 63 ; 27) est adaptée pour appeler chacune de ces fonctions d'inspection afin d'obtenir un ensemble de jeux de données de configurations et pour appeler chacune desdites sixième, septième, et huitième fonctions avec, à chaque fois, l'un au moins de ces jeux de données.

**11.** Outil selon l'une des revendications 9 et 10, comprenant en outre une fonction de modification de configuration logicielle (65) capable de modifier activement certaines au moins des données parmi le groupe formé des données de configuration de mémoire tampon de l'interface réseau, de données de configuration de file d'attente TCP, et de configuration de l'application de transfert de données, et dans lequel

- l'agent local (23) est agencé pour, sur appel, recevoir une valeur-cible de limite de débit d'émission ou de réception de données, pour appeler la fonction de diagnostic logiciel et pour appeler la fonction de modification de configuration dans le cas où la second valeur-référence est inférieure à ladite valeur-cible.

**12.** Outil selon l'une des revendications précédentes, dans lequel l'agent local comprend en outre:

- une neuvième fonction (81) adaptée pour établir une neuvième valeur prédictive de limite de débit d'émission ou de réception de données à partir de données de performance de chemin réseau, et dans lequel
- l'agent local (23) est agencé pour, sur appel préalable à un transfert de données, lancer la neuvième fonction (81) et pour retourner une troisième valeur-référence de débit d'émission ou de réception de données en tant que grandeur d'intérêt en liaison avec ladite valeur-référence de débit d'émission ou de réception de données.

**13.** Outil selon l'une des revendications précédentes comprenant en outre un agent distant exécutable sur une machine informatique comportant de la mémoire vive, une ou plusieurs unités centrales de traitement, et une ou plusieurs interfaces de communication avec le réseau d'échange de données de l'ordinateur sur lequel s'exécute l'agent local, les interfaces étant reliées à la mémoire vive par l'intermédiaire d'un bus de transfert de données, ledit agent distant étant similaire à l'agent local.

14. Outil selon l'une des revendications 9 à 11, dans lequel l'agent local comprend en outre une fonction de modification de paramètres de protocole TCP (83) et dans lequel l'agent local (23), sur appel, lance ladite fonction de modification de paramètres avec un jeu prédéterminé de paramètres de configuration puis ladite fonction de diagnostic logiciel, ladite seconde valeur -référence pouvant être comparée à une valeur-cible de débit d'émission ou de réception de données.

**Patentansprüche**

1. Datenverarbeitungsvorrichtung, aufweisend einen lokalen Agenten (23) zur Vorübertragung, welcher auf einer Datenverarbeitungsmaschine (3,5) ausführbar ist, diese aufweisend den Arbeitsspeicher (15), eine oder mehrere Hauptprozessoreinheiten (13) und eine oder mehrere Kommunikationsschnittstellen (17) mit einem Netz zum Austausch von Daten (7), welche mit dem Arbeitsspeicher (15) über einen Kommunikationsbus (19) verbunden ist, **dadurch gekennzeichnet, dass** der besagte Agent (23) aufweist:

- eine erste Funktion (53), welche eingerichtet ist zum Ermitteln eines ersten Vorhersagewerts für eine Grenze des Durchsatzes des Sendens oder des Empfangens von Daten, ausgehend von Hardwarekonfigurationsdaten, die vom Arbeitsspeicher bedingt sind,
- eine zweite Funktion (55), welche eingerichtet ist zum Ermitteln eines zweiten Vorhersagewerts für eine Grenze des Durchsatzes des Sendens oder des Empfangens von Daten, ausgehend von Hardwarekonfigurationsdaten, die von den Hauptprozessoreinheiten bedingt sind,
- eine dritte Funktion (57), welche eingerichtet ist zum Ermitteln eines dritten Vorhersagewerts für eine Grenze des Durchsatzes des Sendens oder des Empfangens von Daten, ausgehend von Hardwarekonfigurationsdaten, die vom Kommunikationsbus bedingt sind,
- eine vierte Funktion (59), welche eingerichtet ist zum Ermitteln eines zweiten Vorhersagewerts für eine Grenze des Durchsatzes des Sendens oder des Empfangens von Daten, ausgehend von Hardwarekonfigurationsdaten, die von der Kommunikationsschnittstelle bedingt sind, und
- eine Hardware-Diagnose-Funktion (25; 35; 37), welche eingerichtet ist zum Aufrufen von jeder von der ersten, zweiten, dritten und vierten Funktion, und zum Ermitteln, ausgehend von dem ersten, zweiten, dritten und vierten resultierenden Vorhersagewert für eine Grenze des Durchsatzes, eines Referenzwerts für eine Grenze des Durchsatzes des Sendens oder des Empfangens von Daten entsprechend der vordefinierten Regeln zum Vergleichen der besagten Vorhersagewerte,

wobei der lokale Agent (23) dazu eingerichtet ist, bei einem Aufruf vor einem Transfer von Daten die Funktion zur Hardwarediagnose (37) zu starten und den besagten Referenzwert des Durchsatzes des Sendens oder des Empfangens von Daten als Größe von Interesse zurückzugeben, in Verbindung mit mindestens einer anderen Größe des Durchsatzes des Sendens oder des Empfangens von Daten.

2. Datenverarbeitungsvorrichtung gemäß Anspruch 1, bei welchem der lokale Agent ferner aufweist:

- eine erste Inspektionsfunktion (43), welche in der Lage ist, die Konfigurationsdaten des Arbeitsspeichers zu sammeln,
- eine zweite Inspektionsfunktion (45), welche in der Lage ist, die Konfigurationsdaten der Hauptprozessoreinheiten zu sammeln,
- eine dritte Inspektionsfunktion (47), welche in der Lage ist, die Konfigurationsdaten des Datentransferbusses zu sammeln,
- eine vierte Inspektionsfunktion (49), welche in der Lage ist, die Konfigurationsdaten der Netz-Kommunikationsschnittstelle zu sammeln,

und bei welchem

- die Hardware-Diagnose-Funktion (25; 35; 37) eingerichtet ist zum Aufrufen jeder dieser Inspektionsfunktionen, um eine Mehrzahl von Datensätzen der Konfigurationen zu erhalten, und zum Aufrufen jeder von der besagten ersten (53), zweiten (55), dritten (57) und vierten (59) Funktion mit, bei jedem Aufruf, zumindest einem der Datensätze.

3. Datenverarbeitungsvorrichtung gemäß der Ansprüche 1 und 2, bei welchem der lokale Agent ferner aufweist:

- eine fünfte Funktion (51), welche eingerichtet ist zum Ermitteln eines fünften Vorhersagewerts für eine Grenze des Durchsatzes des Sendens oder des Empfangens von Daten, ausgehend von Hardwarekonfigurationsdaten, die von den Medien zur permanenten Speicherung von Daten bedingt sind,

und bei welchem,

- die Hardware-Diagnosefunktion (25; 35; 37), welche eingerichtet ist zum Aufrufen dieser fünften Funktion (51) und zum Ermitteln des besagten Referenzwerts, unter Berücksichtigung eines anderen der fünf Werte für die Grenze des Durchsatzes des Sendens oder des Empfangens.

4. Datenverarbeitungsvorrichtung gemäß irgendeinem der vorhergehenden Ansprüche, bei welchem

- die zweite Funktion (55) eingerichtet ist zum Ermitteln eines Grenzwerts des Sendens/Empfangens von allgemeinen Daten, welche ausschließlich von Hardwarekonfigurationsdaten der Hauptprozessoreinheiten ausgehend eingerichtet ist, und zum Ermitteln, als zweiter Grenzwert des Durchsatzes des Sendens/Empfangens, des besagten Grenzwerts des Sendens/Empfangens der allgemeinen Daten mit Hilfe von einem oder mehreren spezifischen Koeffizienten, welche ausgehend von Daten der Konfiguration oder des Betriebs der Netz-Schnittstelle, ermittelt werden.

5. Datenverarbeitungsvorrichtung gemäß Anspruch 4, bei welchem die spezifischen Koeffizienten zumindest einen ersten Koeffizienten aufweisen, welcher auf der Grundlage eines Datenelements der MTU aus den Daten des Betriebs der Netz-Kommunikationsschnittstelle ermittelt wird.

6. Datenverarbeitungsvorrichtung gemäß Anspruch 5, bei welchem die zweite Funktion (55) eingerichtet ist zum Ermitteln des ersten Koeffizienten gemäß einer logarithmischen Entwicklung in Abhängigkeit des besagten Datenelements der MTU, zwischen einem Maximalwert für einen Maximalwert der MTU und einem Wert von etwa 0,8 für einen Minimalwert der MTU.

7. Datenverarbeitungsvorrichtung gemäß einem der Ansprüche 4 bis 6, bei welchem die spezifischen Koeffizienten aufweisen einen oder mehrere Koeffizienten aus der Gruppe, bestehend aus:

- einem ersten Koeffizienten der Steigerung der Leistung, wenn die Konfigurationsdaten der Schnittstelle ein Datenelement aufweisen, welches einen Betriebsmodus zur regelmäßigen Abfrage der Schnittstelle anzeigt,
- einem zweiten Koeffizienten der Steigerung der Leistung, wenn die Konfigurationsdaten ein Datenelement aufweisen, welches einen Betriebsmodus zur Speicherung der empfangenen Datenpakete vor der Übertragung der Unterbrechungs-Anforderung anzeigt,
- einem dritten Koeffizienten der Steigerung der Leistung, wenn die Konfigurationsdaten ein Datenelement aufweisen, welches einen Betriebsmodus zur Auslagerung eines Teils des TCP-Stapels auf eine Speichereinrichtung der Schnittstelle anzeigt,
- einem vierten Koeffizienten der Steigerung der Leistung, wenn die Daten der Konfiguration ein Datenelement aufweisen, welches einen DMA Betriebsmodus anzeigt.

8. Datenverarbeitungsvorrichtung gemäß Anspruch 7, bei welchem die spezifischen Koeffizienten alle der Koeffizienten der besagten Gruppe aufweisen.

9. Datenverarbeitungsvorrichtung gemäß irgendeinem der vorhergehenden Ansprüche, bei welchem der lokale Agent ferner aufweist:

- eine sechste Funktion (73), welche eingerichtet ist zum Ermitteln eines sechsten Vorhersagewerts für eine Grenze des Durchsatzes des Sendens oder des Empfangens von Daten, ausgehend von Konfigurationsdaten eines Puffers der Netz-Schnittstelle,
- eine siebte Funktion (75), welche eingerichtet ist zum Ermitteln eines siebten Vorhersagewerts für eine Grenze des Durchsatzes des Sendens oder des Empfangens von Daten, ausgehend von Konfigurationsdaten einer TCP-Warteschlange,

- eine achte Funktion (77), welche eingerichtet ist zum Ermitteln eines achten Vorhersagewerts für eine Grenze des Durchsatzes des Sendens oder des Empfangens von Daten, ausgehend von Konfigurationsdaten der Daten-Transfer-Applikation,

- eine Diagnose-Software-Funktion (61, 63; 27), welche eingerichtet ist zum Aufrufen jeder der sechsten (73), siebten (75) und achten (77) Funktion, und zum Einrichten, ausgehend von den sechsten, siebten und achten Vorhersagewerten für die Grenze des resultierenden Durchsatzes, eines zweiten Referenzwerts des Durchsatzes des Sendens oder des Empfangens von Daten, welcher mit vordefinierten Regeln des Vergleichens der besagten Vorhersagewerte übereinstimmt,

- wobei der lokale Agent (23) dazu eingerichtet ist, bei einem Aufruf vor einem Transfer von Daten, die Diagnose-Software-Funktion (61, 63; 27) zu starten und den besagten zweiten Referenzwert des Durchsatzes des Sendens oder des Empfangens von Daten als Größe von Interesse zurückzugeben, in Verbindung mit dem besagten Referenzwert des Durchsatzes des Sendens oder des Empfangens von Daten.

10. Datenverarbeitungsvorrichtung gemäß Anspruch 9, ferner aufweisend

- eine sechste Inspektionsfunktion (67), welche in der Lage ist, Konfigurationsdaten eines Puffers der Netz-Schnittstelle zu sammeln,
- eine siebte Inspektionsfunktion (69), welche in der Lage ist, Konfigurationsdaten einer TCP-Warteschlange zu sammeln,
- eine achte Inspektionsfunktion (71), welche in der Lage ist, Konfigurationsdaten der Daten-Transfer-Applikation zu sammeln,

und bei welchem

- die Diagnose-Software-Funktion (61, 63; 27) eingerichtet ist zum Aufrufen jeder dieser Inspektionsfunktionen, um eine Mehrzahl von Datensätzen der Konfigurationen zu erhalten, und zum Aufrufen jeder von der besagten sechsten, siebten und achten Funktion mit, bei jedem Aufruf, zumindest einem der Datensätze.

11. Datenverarbeitungsvorrichtung gemäß einem der Ansprüche 9 und 10, ferner aufweisend eine Modifikationsfunktion der Konfigurations-Software (65), welche in der Lage ist, aktiv zumindest bestimmte Daten aus der Gruppe, bestehend aus den Konfigurationsdaten des Puffers der Netz-Schnittstelle, den Konfigurationsdaten der TCP-Warteschlange und den Konfigurationsdaten der Daten-Transfer-Applikation, zu modifizieren, und bei welchem

- der lokale Agent (23) eingerichtet ist, um, auf Anruf, einen Zielwert für die Grenze des Durchsatzes des Sendens oder des Empfangens von Daten zu erhalten, zum Aufrufen der Diagnose-Software-Funktion und zum Aufrufen der Modifikationsfunktion der Konfiguration für den Fall, dass der zweite Referenzwert kleiner als der besagte Zielwert ist.

12. Datenverarbeitungsvorrichtung gemäß irgendeinem der vorhergehenden Ansprüche, bei welchem der lokale Agent ferner aufweist:

- eine neunte Funktion (81) welche eingerichtet ist zum Ermitteln eines neunten Vorhersagewerts für eine Grenze des Durchsatzes des Sendens oder des Empfangens von Daten, ausgehend von Leistungsdaten des Netzwerkpfads, und bei welchem
- der lokale Agent (23) eingerichtet ist, bei einem Aufruf vor einem Transfer von Daten, die neunte Funktion (81) zu starten und einen dritten Referenzwert des Durchsatzes des Sendens oder des Empfangens von Daten als Größe von Interesse zurückzugeben, in Verbindung mit dem besagten Referenzwert des Durchsatzes des Sendens oder des Empfangens von Daten.

13. Datenverarbeitungsvorrichtung gemäß irgendeinem der vorhergehenden Ansprüche, ferner aufweisend einen aus der Ferne ausführbaren Agenten, welcher auf einer Datenverarbeitungsmaschine ausführbar ist, diese aufweisend den Arbeitsspeicher, eine oder mehrere Hauptprozessoreinheiten und eine oder mehrere Kommunikationsschnittstellen mit einem Netz zum Datenaustausch von dem Rechner, wo der lokale Agent ausgeführt wird, wobei die Schnittstellen über einen Datentransferbus mit dem Arbeitsspeicher verbunden sind, wobei der besagte ferne Agent gleich zum lokalen Agenten ist.

14. Datenverarbeitungsvorrichtung gemäß irgendeinem der Ansprüche 9 bis 11, bei welchem der lokale Agent ferner aufweist eine Funktion zur Modifikation von Parameter eines TCP-Protokolls und bei welchem der lokale Agent (23), auf Anruf, die besagte Funktion zur Modifikation der Parameter mit einem vorbestimmten Satz von Konfigurations-Parameter startet und dann die besagte Diagnose-Software-Funktion, wobei der besagte zweite Referenzwert mit einem Zielwert des Durchsatzes des Sendens oder des Empfangens von Daten verglichen werden kann.

**Claims**

1. A computer tool including a local pre-transfer agent (23), that can be run on a local computer (3, 5) comprising random-access memory (15), one or more central processing units (13), and one or more communication interfaces (17) for communicating with a data exchange network (7) and which are connected to the random-access memory (15) by means of a communication bus (19), **characterized in that** said agent (23) includes:

   - a first function (53) adapted to establish a first predictive value of data transmission or reception bandwidth limit from configuration data in the memory,
   - a second function (55) adapted to establish a second predictive value of data transmission or reception bandwidth limit from hardware configuration data relative to the processing units,
   - a third function (57) adapted to establish a third predictive value of data transmission or reception bandwidth limit from hardware configuration data relative to the communication bus,
   - a fourth function (59) adapted to establish a fourth predictive value of data transmission or reception bandwidth limit from hardware configuration data relative to the communication interface, and
   - a hardware diagnostic function (25; 35; 37) adapted to invoke each one of said first, second, third and fourth functions and to establish, from the resulting first, second, third and fourth predictive bandwidth limit values, a bandwidth reference value for data transmission or reception, in accordance with predefined comparison rules for said predictive values,
   - the local agent (23) being arranged so as, upon prior call for data transfer, to launch the hardware diagnostic function (37) and return said data transmission or reception bandwidth reference value as a quantity of interest in connection with at least one other data transmission or reception bandwidth quantity.

2. The tool according to claim 1, wherein the local agent also includes:

   - a first inspection function (43) capable of assembling memory configuration data,
   - a second inspection function (45) capable of assembling configuration data of the central processing units,
   - a third inspection function (47) capable of assembling configuration data of the data transfer bus,
   - a fourth inspection function (49) capable of assembling configuration data of the network communication interface,

   and wherein

   - the hardware diagnostic function (25; 35; 37) is adapted to invoke each of these inspection functions so as to obtain a set of configuration data sets and invoke each of said first (53), second (55), third (57) and fourth (59) functions with, each time, at least one of these data sets.

3. The tool according to one of claims 1 and 2, wherein the local agent also includes:

   - a fifth function (51) adapted to establish a fifth predictive value of the data transmission or reception bandwidth limit, from hardware configuration data relative to permanent data storage media,

   and wherein,

   - the hardware diagnostic function (25; 35; 37) is adapted to invoke this fifth function (51) and to establish said reference value also taking into account the fifth transmission/reception bandwidth limit value.

4. The tool according to one of the preceding claims, wherein

   - the second function (55) is adapted to establish a general data transmission/reception bandwidth limit value, established exclusively from hardware configuration data of the processing units, and to establish, as second transmission/reception bandwidth limit value, said general data transmission/reception bandwidth limit value adapted using one or more specific coefficients, established from configuration or operating data of the network communication interface.

5. The tool according to claim 4, wherein the specific coefficients include at least one first coefficient established based on an MTU datum from the operating data of the network communication interface (17).

6. The tool according to claim 5, wherein the second function (55) is adapted to establish said first coefficient according to a logarithmic evolution as a function of said MTU datum, between a maximum value for a maximal value of MTU and a value of approximately 0.8 for a minimal value of MTU.

7. The tool according to one of claims 4 to 6, wherein the specific coefficients include one or more coefficients from the group made up of:

- a first performance increase coefficient when the configuration data of the interface include a datum indicating an operating mode with regular querying of the interface,
- a second performance increase coefficient when the configuration data include a datum indicating an operating mode with an accumulation of received data packets before transmitting an interrupt request,
- a third performance increase coefficient when the configuration data include a datum indicating an operating mode with movement of part of the TCP stack into a memory of the interface,
- a fourth performance increase coefficient when the configuration data include a datum indicating a DMA operating mode.

8. The tool according to claim 7, wherein the specific coefficients include all of the coefficients of said group.

9. The tool according to one of the preceding claims, wherein the local agent (23) also includes:

- a sixth function (73) adapted to establish a sixth predictive value of data transmission or reception bandwidth limit, from buffer memory configuration data of the network interface,
- a seventh function (75) adapted to establish a seventh predictive value of data transmission or reception bandwidth limit, from TCP queue configuration data,
- an eighth function (77) adapted to establish an eighth predictive value of the data transmission or reception bandwidth limit, from configuration data of the data transfer application,
- a software diagnostic function (61, 63; 27) arranged to invoke each of the sixth (73), seventh (75), eighth (77) functions, and to establish, from the sixth, seventh and eighth resulting predictive values of the bandwidth limit, a second data transmission or reception bandwidth reference value according to predefined rules for comparing said predictive values,
- the local agent (23) being arranged so as, upon prior call for a data transfer, to initiate the software diagnostic function (61, 63; 27) and to return said second data transmission or reception bandwidth reference value as size of interest in relation with said data transmission or reception bandwidth reference value.

10. The tool according to claim 9, also including

- a sixth inspection function (67) capable of assembling buffer memory configuration data of the network interface,
- a seventh inspection function (69) capable of assembling TCP queue configuration data,
- an eighth inspection function (71) capable of assembling configuration data of the data transfer application,

and wherein

- the software diagnostic function (61, 63; 27) is adapted to invoke each of these inspection functions so as to obtain a set of configuration data sets and to invoke each of said sixth, seventh and eighth functions with, each time, at least one of these data sets.

11. The tool according to one of claims 9 and 10, also including a software configuration modification function (65) capable of actively modifying at least some of the data among the group made up of the buffer memory configuration data of the network interface, TCP queue configuration data, and configuration of the data transfer application, and in which

- the local agent (23) is arranged so as, when called upon, to receive a data transmission or reception bandwidth limit target value, to invoke the software diagnostic function, and to invoke the configuration modification function in the case where the second reference value is lower than said target value.

12. The tool according to one of the preceding claims, wherein the local agent also includes:

   - a ninth function (81) adapted to establish a ninth predictive value of data transmission or reception bandwidth limit from network path performance data, and wherein
   - the local agent (23) is adapted so as, upon prior call for a data transfer, to initiate the ninth function (81) and to return a third data transmission or reception bandwidth reference value as quantity of interest in relation with said data transmission or reception bandwidth reference value.

13. The tool according to one of the preceding claims, also including a remote agent that is able to can be executed on a computer comprising random-access memory, one or more central processing units, and one or more communication interfaces with the data exchange network of the computer on which the local agent is executed, the interfaces being connected to the random-access memory by means of a data transfer bus, said remote agent being similar to the local agent.

14. The tool according to one of claims 9 to 11, wherein the local agent also includes a TCP protocol parameter modification function (83) and wherein the local agent (23), when called upon, initiates said parameter modification function with a predetermined set of configuration parameters, then said software diagnostic function, said second reference value being able to be compared to a data transmission or reception bandwidth target value.

Fig. 1

Fig. 2

Fig. 3

Fig. 4

Fig. 5

Fig. 6

Fig. 7

Fig. 8

Fig. 9

Fig. 10

Fig. 11

63

NICSftDiag 73

QueueDiag 75

AppDiag 77

# Fig. 12

Fig. 13

Networkconfig

MTU
RTT
C
A
p
B
T

# Fig. 14

**EP 2 497 235 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2913838 A